# EUROPEAN PATENT APPLICATION

(11) **EP 4 564 868 A1**
(43) Date of publication of application: **04.06.2025**
(21) Application number: 23851526.6
(22) Date of filing: 11.07.2023
(51) Int. Cl.: H04W 8/22

(54) **COMMUNICATION METHOD AND APPARATUS**

(30) Priority: 09.08.2022 CN 202210952557
(71) Applicant: Huawei Technologies Co., Ltd., Shenzhen, Guangdong 518129 (CN)
(72) Inventor: LI, Bingzhao, Shenzhen, Guangdong 518129 (CN); WANG, Rui, Shenzhen, Guangdong 518129 (CN); SHA, Tong, Shenzhen, Guangdong 518129 (CN); ZHANG, Haisen, Shenzhen, Guangdong 518129 (CN)
(74) Representative: Maiwald GmbH
(86) International application number: PCT/CN2023/106761
(87) International publication number: WO 2024/032301

(57) **Abstract**

This application provides a communication method and apparatus. The method includes: A terminal device reports capability information, where the capability information includes an indication information set of N band set pairs, each piece of indication information in the indication information set is associated with one band set pair, the indication information indicates switching of a transmission branch performed by the terminal device between two band sets in the band set pair, the band set includes at least one of L bands in the band set pair, and L is an integer greater than or equal to 3. In the foregoing manner, a data transmission rate and spectrum utilization efficiency of the terminal device can be improved.

## Description

This application claims priority to Chinese Patent Application No. CN202210952557.X, filed with the China National Intellectual Property Administration on August 09, 2022 and entitled "COMMUNICATION METHOD AND APPARATUS", which is incorporated herein by reference in its entirety.

### TECHNICAL FIELD

This application relates to the wireless communication field, and in particular, to a communication method and apparatus.

### BACKGROUND

Uplink transmitter switching (UL Tx switching) is a new feature introduced in 5G evolved versions. In this feature, a terminal device switches a transmitter between carriers, and uses an FDD carrier and a TDD carrier in an uplink in a time division multiplexing manner, so that advantages of a plurality of FDD uplink slots and a large TDD uplink bandwidth are fully aggregated in time domain and frequency domain, thereby maximizing uplink resource utilization, improving a network capacity, and increasing an uplink rate.

A key word of UL Tx switching is switching (switching). The transmitter of the terminal device is continuously and dynamically switched between two carriers, and this is equivalent to opening an FDD carrier lane beside the TDD carrier. In downlink time of the TDD carrier, the FDD carrier bears the uplink; and in TDD uplink time, the FDD carrier simultaneously works with the TDD carrier, to ensure uplink online at a real-time high speed.

In a current related technology, UL Tx switching supports only switching between two bands, and the terminal device can report only a capability of switching the transmitter between the two bands. As a result, switching between more bands is not considered, and consequently an uplink transmission rate is limited.

### SUMMARY

Embodiments of this application provide a communication method and apparatus, to improve a data transmission rate and spectrum utilization efficiency of a terminal device.

According to a first aspect, an embodiment of this application provides a communication method. The method may be performed by a terminal device, or may be performed by a chip used in the terminal device. An example in which the method is performed by the terminal device is used below for description. The method includes:
The terminal device receives capability query message from a network device, and the terminal device reports capability information of the terminal device to the network device, where the capability information includes an indication information set of N band set pairs, and N is a positive integer. In other words, the terminal device may report an indication information set of one band set pair, or may report an indication information set of a plurality of band set pairs. Each piece of indication information in the indication information set is associated with at least one band set pair. For the band set pair associated with the indication information, the indication information indicates switching of a transmission branch performed by the terminal device between two band sets in the associated band set pair. Each band set in the band set pair includes at least one of L bands (bands) in the band set pair, and L is an integer greater than or equal to 2. Optionally, L is an integer greater than or equal to 3.

In this application, the transmission branch may be a radio frequency branch, a transmit branch (Tx branch), or a receive branch (Rx branch). The transmit branch may be an uplink transmitter or an uplink transmit link. The receive branch may be a downlink receiver or a downlink transmit link.

In this embodiment of this application, if L is equal to 2, each band set in the at least one band set pair includes one band. If L is an integer greater than or equal to 3, at least one band set in the at least one band set pair includes at least two bands. To be specific, a first band set in the N band set pairs includes at least two bands, and/or a second band set in the band set pair includes at least two bands. In addition, because two band sets in one band set pair are not completely consistent, if L is an integer greater than or equal to 3, the band set pair is related to a switching scenario of at least three bands. In some cases, when the terminal device switches the transmission branch between the at least three bands, the terminal device may flexibly determine, based on a data traffic requirement, a network configuration of a band, a bandwidth of a band, a channel condition of a band, and the like, how to switch the transmission branch between three or more bands. Usually, data transmission efficiency and spectrum utilization efficiency of switching the transmission branch by the terminal device between the at least three bands are higher than data transmission efficiency and spectrum utilization efficiency of switching the transmission branch by the terminal device between two bands.

Therefore, in the solution in this embodiment of this application, switching performed by the terminal device between the at least three bands can be supported, so that application scenarios in which the terminal performs band switching are more diverse, thereby improving a data transmission rate and spectrum utilization efficiency of the terminal device.

In a possible implementation, 2≤N, to be specific, the terminal device reports an indication information set of at least two band set pairs. The N band set pairs are associated with one band combination (band combination, BC), and the band combination includes bands in the N band set pairs supported by the terminal device. In other words, a band in any band set pair belongs to the band combination. That the N band set pairs are associated with one band combination may also be understood as that the terminal device reports the indication information set of the N band set pairs associated with the one band combination. The band combination is a band combination supporting switching of the transmission branch. In a possible implementation, the band combination is a band combination reported by using a BandCombinationList-UplinkTxSwitch field. When the transmission branch is a transmit branch, the L bands in the band set pair may be uplink bands included in the band combination. When the transmission branch is a receive branch, the L bands in the band set pair may be downlink bands included in the band combination. In a possible implementation, the bands in the N band set pairs are all bands in the associated band combination. In another possible implementation, the bands in the N band pairs are a subset of bands in the associated band combination.

In this embodiment of this application, that the terminal device reports capability information of the terminal device to the network device includes:
reporting the capability information of the terminal device to the network device based on a preset correspondence between the N band set pairs and the pieces of indication information in the indication information set.

In this embodiment of this application, because there is a correspondence between the indication information in the indication information set and the band set pair, the network device may determine, based on the correspondence, a band set pair corresponding to each piece of indication information in the indication information set. To be specific, even if the indication information does not indicate band identifiers of two band sets included in the band set pair, the network device can determine the band set pair corresponding to the indication information, so that the network device determines specific bands included in the two band sets, in the band set pair corresponding to the indication information, between which the transmission branch is switched. The band identifier does not need to be indicated, so that a data amount required for indicating the band identifier by the indication information is reduced. Therefore, it can be learned that signaling overheads for reporting the capability information by the terminal device to the network device are reduced. The correspondence may be that an order of the pieces of indication information in the information set is related to a preset order of the N band set pairs.

In a possible implementation, an order of the pieces of indication information in the indication information set is the same as a preset order of the N band set pairs. It can be understood that the indication information set includes N pieces of indication information, and the N pieces of indication information are in one-to-one correspondence with the N band set pairs. The N band set pairs have a preset order. Therefore, each of the N pieces of indication information may uniquely correspond to one band set pair. For example, in the indication information set, a 1^{st} piece of indication information corresponds to a first band set pair, a 2^{nd} piece of indication information corresponds to a second band set pair, and so on.

In a possible implementation, there is a correspondence between the preset order of the N band set pairs and an arrangement order of N elements in a first preset table.

In a possible implementation, the arrangement order of the N elements in the first preset table includes:
all elements Eij in the N elements Eij are sequentially arranged in ascending order of columns and rows, the element Eij is an element in an i^{th} row and a j^{th} column in the first preset table, there is a correspondence between a band set of each of the N band set pairs and the element Eij in the first preset table, j is greater than i, 1≤i≤K, j≤K, i≤K, K, i, and j are all positive integers, and K is a quantity of band sets associated with the band combination.

There are K band sets including any Q bands in P bands in one band combination. Q may be less than or equal to a quantity of transmission branches supported by the terminal device, or Q may be less than or equal to P. For example, the terminal device supports two transmit branches, and one band combination includes three uplink bands: a band A, a band B, and a band C. There are three band sets including any one uplink band: {band A}, {band B}, and {band C}; and there are three band sets including any two uplink bands: {band A, band B}, {band B, band C}, and {band A, band C}. Therefore, there are K=6 band sets in total. The six band sets are arranged in a preset order ({band A}, {band B}, {band C}, {band A, band B}, {band B, band C}, and {band A, band C}). Therefore, the six band sets may include N=15 band set pairs.

In a possible implementation, the indication information indicates switching time. The terminal device cannot perform transmission on the transmission branch in the switching time. For example, when the transmission branch is a transmit branch, the terminal device cannot send uplink signaling or data in the switching time of the transmission branch. After learning of a switching time capability of the terminal device, the network device may determine that the terminal device does not send the uplink signaling or data in the switching time for switching the transmit branch between the two band sets in the band set pair, instead of not receiving the uplink signaling or data due to a poor channel condition or the like; and the network device does not allocate an uplink resource or schedule uplink transmission in the switching time either, so that a waste of radio resources can be avoided.

In this embodiment of this application, if the indication information includes the switching time, when the network device receives the indication information set, if the network device learns of the band set pair corresponding to the indication information, the network device may determine switching time for switching the transmission branch between two band sets in each band set pair.

In a possible implementation, the switching time is related to a quantity of transmission branches configured on the band in the band set.

For example, for switching time for the terminal device between a band set {band A} and a band set {band B+band C}, assuming that the terminal device has two transmission branches, when the terminal device performs transmission on {band B+band C}, one transmission branch is used for transmission on the band B, and the other transmission branch is used for transmission on the band C; or when the terminal device performs transmission on the band A, both the two transmission branches of the terminal device may be used for transmission on the band A, or one transmission branch of the terminal device may be used for transmission on the band A. In this case, switching time for switching the terminal device to use one transmission branch for transmission on the band A to use two transmission branches for transmission on {band B+band C} may be different from switching time for switching the terminal device to use two transmission branches for transmission on the band A and to use two transmission branches for transmission on {band B+band C}. Therefore, for the switching time, the quantity of transmission branches configured on the band in the band set needs to be distinguished. The terminal device may report different switching time capabilities for different quantities of transmission branches. When transmission configurations of carriers on the band are different, the network device may determine, based on the capability reported by the terminal device, a length of the switching time for which uplink scheduling is to be suspended.

In a possible implementation, the indication information indicates a band identifier for switching the transmission branch between the two band sets.

The band identifier is used as an identity of a band, and a specific band may be identified by using the band identifier. Therefore, the band identifier can indicate a band included in each of the two band sets between which the transmission branch is switched. Optionally, the terminal device may report the band identifier for switching supported by the terminal device on the band set pair.

In a possible implementation, the indication information indicates that the terminal device supports or does not support switching the transmission branch between the two band sets in the band set pair.

In this embodiment of this application, due to impact of some factors, for example, impact of a factor such as a hardware capability of the terminal device, the terminal device may not be capable of switching the transmission branch between the two band sets in the N band set pairs, and the band set pair on which the terminal device supports switching the transmission branch is a subset of the N band set pairs. Therefore, in this embodiment of this application, the indication information indicates that the terminal device supports or does not support switching the transmission branch between the two band sets in the N band set pairs. **In** this case, the network device may learn of a band set pair supported by the terminal device and a band set pair not supported by the terminal device. Based on this, the network device may configure the terminal device to switch the transmission branch between the two band sets in the supported band set pair.

It should be noted that if the terminal device reports the capability information of the terminal device to the network device based on the preset correspondence between the N band set pairs and the pieces of indication information in the indication information set, an objective of reporting the band set pair supported and the band set pair not supported in the N band set pairs herein is mainly to ensure that the one-to-one correspondence between the N band set pairs and the N pieces of indication information in the indication information set is not disordered.

**In** a possible implementation, the indication information indicates that switching time associated with M band set pairs in the N band set pairs is the same, each of the M band set pairs includes same bands, and 2≤M.

**In** this embodiment of this application, the indication information indicates that the pieces of switching time associated with the M band set pairs in the N band set pairs are the same, each of the M band set pairs includes same bands, and 2≤M. **In** this case, when reporting the capability information, the terminal device may report only one same piece of switching time, and does not need to report pieces of switching time for all band set pairs. Therefore, it can be learned that a quantity of pieces of switching time in the capability information is less than N, so that in this embodiment of this application, overheads of signaling between the terminal device and the network device can be reduced.

**In** a possible implementation, to meet a specific requirement, the terminal device reports a band set pair that meets a preset condition. Optionally, the preset condition may be that there is at least one same band between the two band sets in the band set pair.

**In** this embodiment of this application, the terminal device may report the band set pair that meets the constraint condition, to adapt to different reporting scenarios.

According to a second aspect, an embodiment of this application provides a communication method. The method may be performed by a network device, or may be performed by a chip used in the network device. For beneficial effect, refer to the descriptions in the first aspect. Details are not described herein again. An example in which the method is performed by the network device is used below for description. The method includes: The network device sends a capability query message to a terminal device, and receives capability information reported by the terminal device, where the capability information includes an indication information set of N band set pairs, each piece of indication information in the indication information set is associated with one band set pair, the indication information indicates switching of a transmission branch performed by the terminal device between two band sets in the band set pair, the band set includes at least one of L bands in the band set pair, L is an integer greater than or equal to 3, and N is a positive integer. After receiving the capability information, the network device may determine switching time of each band set pair based on the indication information in the indication information set, where the switching time indicates time for the terminal device to switch the transmission branch between the two band sets in the band set pair.

Therefore, in the solution in this embodiment of this application, switching performed by the terminal device between at least three bands can be supported, so that application scenarios in which the terminal performs band switching are more diverse, thereby improving a data transmission rate and spectrum utilization efficiency of the terminal device.

In a possible implementation, the determining switching time of each band set pair based on the indication information in the indication information set includes: determining the switching time of each band set pair based on a preset correspondence between the N band set pairs and the pieces of indication information in the indication information set.

In a possible implementation, an order of the pieces of indication information in the indication information set is the same as a preset order of the N band set pairs.

In a possible implementation, there is a correspondence between the preset order of the N band set pairs and an arrangement order of N elements in a second preset table. The second preset table may be the same as a first preset table, and the network device and the terminal device may determine, based on a same preset table, a band set pair corresponding to each piece of indication information in the indication information set.

In a possible implementation, the arrangement order of the N elements in the second preset table includes:
all elements Eij in the N elements are sequentially arranged in ascending order of columns and rows, the element Eij is an element in an i^{th} row and a j^{th} column in the first preset table, there is a correspondence between a band set of each of the N band set pairs and the element Eij in the first preset table, j is greater than i, 1≤i≤K, j≤K, K, i, and j are all positive integers, and K is a quantity of band sets associated with a band combination.

In a possible implementation, K band sets include any Q bands in P bands in the band combination, the K band sets are arranged in a preset order in the first preset table, and Q is a positive integer.

**In** a possible implementation, the switching time is related to a quantity of transmission branches configured on the band in the band set.

**In** a possible implementation, the indication information indicates a band identifier for switching the transmission branch between the two band sets.

**In** a possible implementation, the indication information indicates that the terminal device supports or does not support switching the transmission branch between the two band sets in the band set pair.

**In** a possible implementation, the indication information indicates that switching time associated with M band set pairs in the N band set pairs is the same, each of the M band set pairs includes same bands, and 2≤M.

**In** a possible implementation, the switching time of the band set pair is related to time for the terminal device to switch the transmission branch between any band in one band set and any band in the other band set in the band set pair.

**In** a possible implementation, the switching time of the band set pair is maximum time for the terminal device to switch the transmission branch between any band in one band set and any band in the other band set in the band set pair.

**In** this embodiment of this application, because the network device considers that the terminal device does not have a capability of sending uplink signaling or data in the switching time, the network device does not schedule uplink transmission. Therefore, a meaning of using a maximum value is that if the switching time considered by the network device is less than time in which the terminal device actually switches the transmission branch, the network device may allocate an uplink resource in time in which the terminal device cannot send uplink data, and schedule uplink transmission, causing a waste of radio resources. When the network device does not receive, on the scheduled uplink resource, the uplink data sent by the terminal device, the network device mistakenly considers that a channel condition is poor, and consequently adjusts a current scheduling policy to a more conservative scheduling policy (for example, a lower-order MCS (modulation and coding scheme, modulation and coding scheme)), causing a reduction in an uplink data rate. Therefore, the maximum time is used as the switching time of the band set pair, so that the uplink data rate can be further improved.

According to a third aspect, a communication apparatus is provided. For beneficial effect, refer to the descriptions in the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function. **In** a possible design, the communication apparatus includes a transceiver module, configured to receive a capability query message from a network device; and a processing module, configured to report capability information of a terminal device to the network device, where the capability information includes an indication information set of N band set pairs, each piece of indication information in the indication information set is associated with one band set pair, the indication information indicates switching of a transmission branch performed by the terminal device between two band sets in the one band set pair, the band set includes at least one of L bands in the band set pair, L is an integer greater than or equal to 3, and N is a positive integer. These modules may perform a corresponding function in the method example in the first aspect. For details, refer to the detailed descriptions in the method example. Details are not described herein again.

According to a fourth aspect, a communication apparatus is provided. For beneficial effect, refer to the descriptions in the second aspect. Details are not described herein again. The communication apparatus has a function of implementing the behavior in the method example in the second aspect. The function may be implemented by hardware, or may be implemented by hardware executing corresponding software. The hardware or the software includes one or more modules corresponding to the foregoing function. In a possible design, the communication apparatus includes: a transceiver module, configured to send a capability query message; and receive capability information reported by a terminal device, where the capability information includes an indication information set of N band set pairs, each piece of indication information in the indication information set is associated with one band set pair, the indication information indicates switching of a transmission branch performed by the terminal device between two band sets in the one band set pair, the band set includes at least one of L bands in the band set pair, L is an integer greater than or equal to 3, and N is a positive integer; and a processing module, configured to determine switching time of each band set pair based on the indication information in the indication information set, where the switching time indicates time for the terminal device to switch the transmission branch between the two band sets in the band set pair. These modules may perform a corresponding function in the method example in the second aspect. For details, refer to the detailed descriptions in the method example. Details are not described herein again.

According to a fifth aspect, an embodiment of this application provides a communication apparatus. The communication apparatus includes a processor and an interface circuit. The interface circuit is configured to: receive a signal from another communication apparatus and transmit the signal to the processor, or send a signal from the processor to another communication apparatus. The processor is configured to implement the method according to the first aspect through a logic circuit or by executing code instructions.

According to a sixth aspect, an embodiment of this application provides a communication apparatus. The communication apparatus includes a processor and an interface circuit. The interface circuit is configured to: receive a signal from another communication apparatus and transmit the signal to the processor, or send a signal from the processor to another communication apparatus. The processor is configured to implement the method according to the first aspect through a logic circuit or by executing code instructions.

According to a seventh aspect, an embodiment of this application provides a computer-readable storage medium. The computer-readable storage medium includes computer program instructions. When the computer program instructions are executed by a processor, the processor performs the steps of the method according to the first aspect or the second aspect.

According to an eighth aspect, an embodiment of this application provides a computer program product. The computer program product includes software code, and the software code is used to perform the steps of the method according to the first aspect or the second aspect.

According to a ninth aspect, a chip system is provided in this application. The chip system includes a processor, configured to implement functions of the terminal device in the methods of the foregoing aspects. In a possible design, the chip system further includes a memory, configured to store program instructions and/or data. The chip system may include a chip, or may include a chip and another discrete component.

According to a tenth aspect, a chip system is provided in this application. The chip system includes a processor, configured to implement functions of the network device in the method of the foregoing aspects. In a possible design, the chip system further includes a memory, configured to store program instructions and/or data. The chip system may include a chip, or may include a chip and another discrete component.

According to an eleventh aspect, this application provides a communication method. The method includes: A network device sends communication query information. A terminal device receives the communication query information. The terminal device reports capability information of the terminal device to the network device, where the capability information includes an indication information set of N band set pairs, each piece of indication information in the indication information set is associated with one band set pair, the indication information indicates switching of a transmission branch performed by the terminal device between two band sets in the one band set pair, the band set includes at least one of L bands in the band set pair, L is an integer greater than or equal to 3, and N is a positive integer. The network device receives the capability information reported by the terminal device, and determines switching time of each band set pair based on the indication information in the indication information set, where the switching time indicates time for the terminal device to switch the transmission branch between the two band sets in the band set pair.

According to a twelfth aspect, this application provides a communication system. The communication system includes a terminal device configured to perform the method according to the first aspect and a network device configured to perform the method according to the second aspect.

### BRIEF DESCRIPTION OF DRAWINGS

FIG. 1 is a diagram of an architecture of a communication system to which an application embodiment of this application is applied;
FIG. 2 is a diagram of a band combination according to an embodiment of this application;
FIG. 3 is a diagram of a structure of a UE capability according to an embodiment of this application;
FIG. 4 is a schematic flowchart of a communication method according to an embodiment of this application;
FIG. 5 is a diagram of a switching-related band according to an embodiment of this application;
FIG. 6 is a diagram of another switching-related band according to an embodiment of this application;
FIG. 7 is a diagram of another switching-related band according to an embodiment of this application;
FIG. 8 is a diagram of another switching-related band according to an embodiment of this application;
FIG. 9 is a diagram of another switching-related band according to an embodiment of this application;
FIG. 10 is a diagram of another switching-related band according to an embodiment of this application;
FIG. 11 is a schematic flowchart of another communication method according to an embodiment of this application;
FIG. 12 is a schematic flowchart of another communication method according to an embodiment of this application;
FIG. 13 is a diagram of a structure of a communication apparatus according to an application embodiment of this application;
FIG. 14 is a diagram of a structure of another communication apparatus according to an application embodiment of this application; and
FIG. 15 is a diagram of a structure of a network device according to an embodiment of this application.

### DESCRIPTION OF EMBODIMENTS

The following describes application embodiments of the present invention with reference to accompanying drawings in application embodiments of the present invention. Terms used in implementations of the present invention are merely intended to explain specific application embodiments of the present invention, and are not intended to limit the present invention.

The following describes application embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a distinguishing manner used for describing objects having a same attribute in application embodiments of this application. In addition, the terms "include", "have" and any other variants are intended to cover the non-exclusive inclusion, so that a process, method, system, product, or device that includes a series of units is not necessarily limited to those units, but may include other units not expressly listed or inherent to such a process, method, product, or device.

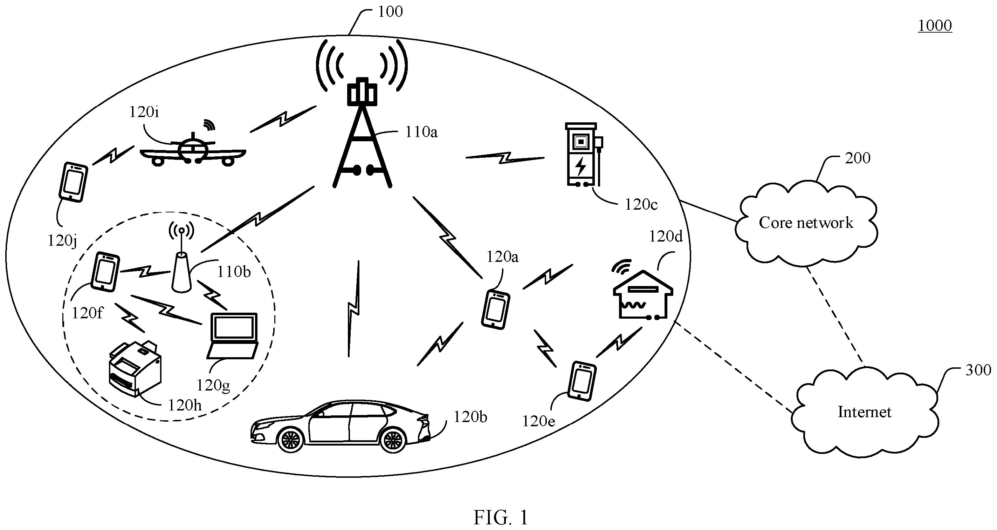

For ease of understanding, the following describes, by using an example, a structure of a terminal device 100 provided in an embodiment of this application. FIG. 1 is a diagram of a structure of a terminal device according to an embodiment of this application.

FIG. 1 is a diagram of an architecture of a communication system 1000 to which an application embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is also referred to as a user equipment (UE, User Equipment) and is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device, which are not shown in FIG. 1.

The radio access network device (which is also referred to as a network device) is an access device that is used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like. Alternatively, the radio access network device may be a module or unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in application embodiments of this application. For ease of description, the following provides descriptions by using an example in which the radio access network device is a base station.

The terminal device is a device having a wireless transceiver function, and may send a signal to the base station, or receive a signal from the base station. The terminal device may also be referred to as a terminal device, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in application embodiments of this application.

The base station and the terminal device may be fixed or movable. The base station and the terminal device may be deployed on land, including an indoor or outdoor scenario and a handheld or vehicle-mounted scenario, or may be deployed on water, or may be deployed on an airplane, a balloon, and an artificial satellite. Application scenarios of the base station and the terminal device are not limited in application embodiments of this application.

Roles of the base station and the terminal device may be relative. For example, a helicopter or an uncrewed aerial vehicle 120i in FIG. 1 may be configured as a mobile base station, and for those terminal devices 120j accessing the radio access network 100 by 120i, the terminal device 120i is a base station. However, for the base station 110a, 120i is a terminal device. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal device may be collectively referred to as a communication apparatus, 110a and 110b in FIG. 1 may be referred to as a communication apparatus having a base station function, and 120a to 120j in FIG. 1 may be referred to as a communication apparatus having a terminal device function.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource used for wireless communication is not limited in application embodiments of this application.

In application embodiments of this application, a base station function may be performed by a module (for example, a chip) in a base station, or may be performed by a control subsystem that has the base station function. The control subsystem having the base station function herein may be a control center in the foregoing application scenarios, such as a smart grid, industrial control, smart transportation, and a smart city. A terminal device function may alternatively be performed by a module (for example, a chip or a modem) in a terminal device, or may be performed by an apparatus that has the terminal device function.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. A cell that establishes a wireless connection to the terminal device is referred to as a serving cell of the terminal device. When communicating with the serving cell, the terminal device is further interfered with by a signal from a neighboring cell.

In application embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, all symbols in embodiments of this application are time domain symbols.

It can be understood that in application embodiments of this application, a PDSCH, a PDCCH, and a PUSCH are only used as examples of a downlink data channel, a downlink control channel, and an uplink data channel. In different systems and different scenarios, a data channel and a control channel may have different names. This is not limited in application embodiments of this application.

Currently, the UE may increase a communication bandwidth by using a carrier aggregation (Carrier Aggregation, CA) technology. The carrier aggregation technology means that a plurality of carriers are simultaneously used to provide services for the UE, and each carrier may have at least one serving cell CC (component carrier) working for the UE. In an existing carrier aggregation technology, usually, one carrier is a primary cell (PCC, primary CC), and another serving cell is a secondary cell (SCC, secondary CC). The secondary cell may be activated or deactivated in a process of using the secondary cell. If no data is transmitted for a period of time, a network may deactivate the secondary cell, and may consider activating the secondary cell when data is sent subsequently. Carrier aggregation includes aggregation of a plurality of carriers on a single band, and also includes aggregation of a plurality of carriers on a plurality of bands.

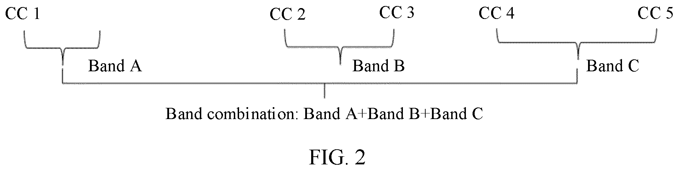

The following uses an example of a multi-band combination for description. As shown in FIG. 2, there is only one carrier on a band: a CC 1. There are a plurality of carriers on a band B: a CC 2 and a CC 3. There are a plurality of carriers on a band C: a CC 4 and a CC 5.

Different UEs have different capabilities due to different hardware or software versions. To better provide services for UEs, the network needs to know the capabilities of the UEs, so that the network can configure appropriate working modes for the UEs.

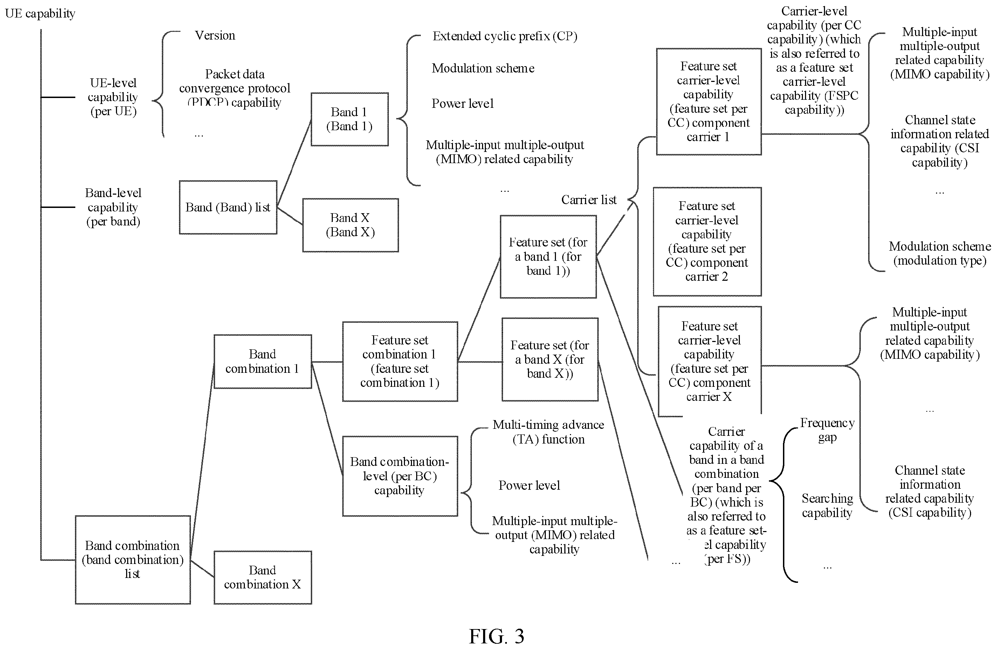

As shown in FIG. 3, a capability structure of a 5G UE includes but is not limited to a UE-level capability (which is referred to as a per UE capability), a band-level capability (which is referred to as a per band), and a band combination (band combination, BC)-level capability (which is referred to as a per BC capability) based on different UE capability levels. The band-level capability is a capability related to a specific band. The band combination usually indicates a carrier aggregation capability of the terminal device. Each band combination includes one or more bands, a capability of the band in the band combination is referred to as a per BC per band capability, each band in the band combination includes one or more carriers, and a capability of the carrier on the band in the band combination is referred to as a per BC per CC capability. In a conventional CA operation, concurrent transmission is allowed between a plurality of carriers. For example, if the UE supports uplink and downlink transmission on two CCs, the UE may simultaneously perform transmission on the two CCs. In addition, when transmission is performed on one carrier, the transmission may be further classified into single-transmission and dual-transmission. If the UE has two transmission branches, and the UE may report a MIMO (multiple-input multiple-output, multiple-input multiple-output) layer 2 on one carrier, it indicates that dual-layer transmission may be supported. If the UE reports that the UE simultaneously supports the layer 2 on two carriers, it indicates that a plurality of carriers can be used to perform concurrent transmission of the layer 2 (2+2). In this case, the UE needs to support four transmit branches.

However, in consideration of costs of the UE, a quantity of transmit branches is limited. For example, when the UE supports only two radio frequency branches, the UE may report two optional capabilities by using FeatureSetsCombinations. An example of the optional capabilities is shown in Table 1 below:

**Table 1**

| Optional capability set | Band A | Band B |
|---|---|---|
| Optional capability 1 | CC 1 (two-layer MIMO) | |
| Optional capability 2 | CC 1 (one-layer MIMO) | CC 2 (one-layer MIMO) |
| Optional capability 3 | | CC 2 (one-layer MIMO) |

The optional capability set may include a plurality of optional capabilities, and may represent that all the plurality of optional capabilities can be supported by the terminal device, for example, an optional capability 1, an optional capability 2, and an optional capability 3 shown in Table 1.

Usually, the base station selects a capability to configure the working mode for the UE. If the capability 2 is selected and two sub-carriers are configured for the UE, each carrier can support only one-layer MIMO. If the capability 1 is expected to be changed to, RRC configuration needs to be performed again to change to a one-carrier two-layer MIMO mode. Consequently, efficiency is low. To overcome this disadvantage, a concept of TX switching is introduced in the standard. The UE may support two-layer MIMO on the CC 1 and also support two-layer MIMO on the CC 2, but simultaneously, the UE notifies the base station that 2+2 MIMO transmission cannot be used (indicated by a band combination of TX switching).

An example of capability reporting is shown in Table 2:

**Table 2**

| Feature set combination | Band A | Band B | Band C |
|---|---|---|---|
| Optional capability 1 | CC 1 (two-layer MIMO) | CC 2 (two-layer MIMO) | NULL |
| Optional capability 2 | NULL | CC 2 (two-layer MIMO) | CC 3 (two-layer MIMO) |

The base station may configure two carriers (the CC 1+the CC 2, or the CC 2+the CC 3) for the UE, but during scheduling, it is controlled that the CC 1 and the CC 2 (or the CC 2 and the CC 3) do not simultaneously use 2-layer MIMO, and switching is performed from the following several transmit modes through scheduling control. An example of the transmit modes is shown in Table 3:

**Table 3**

| Transmit mode set | Band A | Band B |
|---|---|---|
| Transmit mode 1 | CC 1 (two-layer MIMO) | CC 2 (not sent) |
| Transmit mode 2 | CC 1 (not sent) | CC 2 (two-layer MIMO) |
| Transmit mode 3 | CC 1 (one-layer MIMO) | CC 2 (one-layer MIMO) |

The transmit mode set may include a plurality of transmit modes, and may represent that all the plurality of transmit modes can be supported by the terminal device, for example, a transmit mode 1, a transmit mode 2, and a transmit mode 3 shown in Table 1.

Because the transmit mode can be controlled through scheduling, RRC reconfiguration does not need to be performed, thereby improving efficiency of an inter-carrier transmit manner.

In addition, there is a delay during switching between bands. Currently, the terminal may further report corresponding switching time for each band pair. An example of the switching time for the band pair is shown in Table 4:

**Table 4**

| Band pair | Switching time |
|---|---|
| Band A and Band B | 50 µs |
| Band B and Band C | 100 µs |

However, in a current Tx switching solution, Tx switching supports only a working manner of two bands, and a scenario in which more bands participate is not considered. For example, an example of the following three bands is shown in Table 5:

**Table 5**

| Band combination for TX switching | Band A | Band B | Band C |
|---|---|---|---|
| Optional capability 2 | CC 1 (two-layer MIMO) | CC 2 (two-layer MIMO) | CC 2 (two-layer MIMO) |

The sending mode supported by the related technical solution is shown in Table 6:

**Table 6**

| Band combination for TX switching | Band A | Band B | Band C |
|---|---|---|---|
| Mode 1 | CC 1 (two-layer MIMO) | NULL | NULL |
| Mode 2 | NULL | CC 2 (two-layer MIMO) | NULL |
| Mode 3 | NULL | NULL | CC 3 (two-layer MIMO) |
| Model 4 | CC 1 (one-layer MIMO) | CC 2 (one-layer MIMO) | NULL |
| Model 5 | CC 1 (one-layer MIMO) | NULL | CC 3 (one-layer MIMO) |
| Mode 6 | NULL | CC 2 (one-layer MIMO) | CC 3 (one-layer MIMO) |

Usually, data transmission efficiency and spectrum utilization efficiency of switching the transmission branch by the terminal device between at least three bands are higher than data transmission efficiency and spectrum utilization efficiency of switching the transmission branch by the terminal device between two bands. However, in the current technical solution, only two bands can be supported to participate in switching, and the terminal device cannot be supported to participate in switching between the at least three bands. Consequently, a data transmission rate and spectrum utilization of the terminal device for switching are limited. Therefore, the following application embodiments describe how the terminal device improves a data transmission rate and spectrum utilization efficiency of the terminal device.

The communication method and apparatus provided in this application may be applied to a scenario in which there is a specific requirement for a data transmission capability. The following uses some actual scenarios as examples to describe application scenarios of embodiments of this application, but this is not limited thereto.

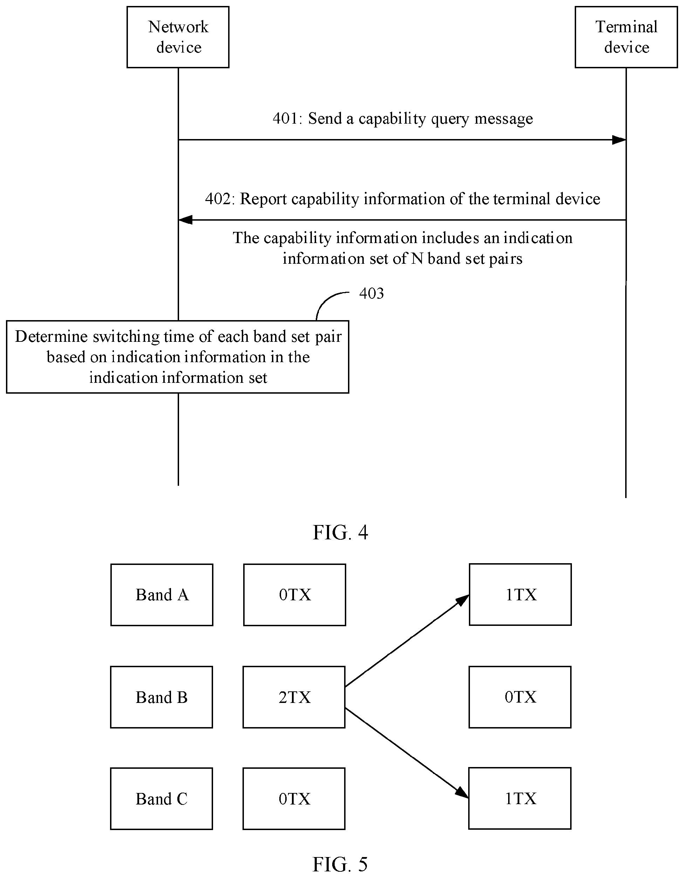

FIG. 4 is a schematic flowchart of a communication method according to an embodiment of this application.

401: A network device sends a capability query message to a terminal device.

402: The terminal device reports capability information of the terminal device to the network device, where the capability information includes an indication information set of N band set pairs.

Each piece of indication information in the indication information set is associated with one band set pair, the indication information indicates switching of a transmission branch performed by the terminal device between two band sets in the one band set pair, the band set includes at least one of L bands in the band set pair, and N is a positive integer.

The capability information may be reported by the terminal device in response to the capability query message. The transmission branch that the terminal device switches may be an uplink transmit branch or a downlink receive branch. Specifically, if the method in this embodiment of this application is used for an uplink service of the terminal device, the transmission branch is an uplink transmit branch, and the band is an uplink band; or if the method in this embodiment of this application is used for a downlink service of the terminal device, the transmission branch is a downlink receive branch, and the band is a downlink band. Optionally, "switching of a transmission branch between two band sets" herein may also be understood as/replaced with "switching of the transmission branch between carriers of the two band sets".

L is an integer greater than or equal to 2. Usually, the two band sets in the band set pair do not completely overlap, and each band set in one band set pair includes at least one band. Specifically, if L is 2, each band set in one band set pair includes one band; or if L is an integer greater than or equal to 3, at least one band set in one band set pair includes at least two bands. For example, assuming that one band set pair includes a band A and a band B, L is 3. In this case, one band set in the band set pair includes the band A, and the other band set includes the band B. Assuming that one band set pair includes a band A, a band B, and a band C, L is 3; and assuming that one band set is a first band set, and the other band set is a second band set, the two band sets in the band set pair include but are not limited to the following cases:
Case 1: The first band set includes the band A, and the second band set includes the concurrent band B and the concurrent band C. Case 2: The first band set includes the concurrent band A and the concurrent band B, and the second band set includes the band C. Case 3: The first band set includes the concurrent band A and the concurrent band B, and the second band set includes the concurrent band B and the concurrent band C. Case 4: The first band set includes the band A, and the second band set includes the band B.

N is a positive integer, to be specific, N may be equal to 1, or may be greater than or equal to 2. For example, the N band set pairs may be shown in Table 7:

**Table 7**

| | | |
|---|---|---|
| Band set pair 1 (band A, band B, and band C) | First band set (band A) | Second band set (band B and band C) |
| Band set pair 2 (band A, band B, and band D) | First band set (band A and band B) | Second band set (band B and band D) |
| Band set pair 3 (band B, band C, and band D) | First band set (band B and band C) | Second band set (band D) |

It should be noted that a quantity of bands in one band set may be related to a quantity of transmission branches of the terminal device. Usually, a quantity of bands in one band set does not exceed a quantity of transmission branches of the terminal device. For example, if the terminal device includes Q data transmission branches, a total quantity of bands in one band set≤Q.

403: The network device determines switching time of at least one band set pair based on the indication information in the indication information set.

The switching time indicates time for the terminal device to switch the transmission branch between the two band sets in the band set pair. Specifically, the switching time can be understood as time required for switching from one band set in the band set pair to the other band set.

In this embodiment of this application, if L is an integer greater than or equal to 3, at least one band set in the at least one band set pair includes at least two bands. To be specific, a first band set in the N band set pairs includes at least two bands, and/or a second band set in the band set pair includes at least two bands. In addition, because two band sets in one band set pair are not completely consistent, if L is an integer greater than or equal to 3, the band set pair is related to a switching scenario of at least three bands (bands). In some cases, when the terminal device switches the transmission branch between the at least three bands, the terminal device may flexibly determine, based on a data traffic requirement, a network configuration of a band, a bandwidth of a band, a channel condition of a band, and the like, how to switch the transmission branch between three or more bands. In this way, a data transmission rate is higher than a data transmission rate at which the terminal device can switch the transmission branch only between two bands. Therefore, in the solution in this embodiment of this application, switching performed by the terminal device between the at least three bands can be supported, so that application scenarios in which the terminal performs band switching are more diverse, thereby improving a data transmission rate and spectrum utilization efficiency of the terminal device.

The transmission branch supported or used on the band can be understood as a transmission branch supported or used by the terminal device when the terminal device performs communication on a carrier on the band. The quantity of transmission branches may correspond to a quantity of MIMO layers supported when the terminal device uses a MIMO transmission manner. For example, one transmit branch corresponds to 1-layer uplink MIMO (1 MIMO layer), and two transmit branches correspond to 2-layer uplink MIMO (2 MIMO layers).

Specifically, not all band set pairs have switching time. If the terminal device does not support switching in a specific band set pair, the band set pair does not have switching time.

It should be noted that even if the terminal device supports switching the transmission branch between the at least three bands, in an actual switching scenario, it does not mean that the terminal device can report only switching, of the transmission branch, that is related to the at least three bands; but may report switching, of the transmission branch, that is related to the two bands, and may also report switching, of the transmission branch, that is related to the at least three bands.

It should be further noted that this embodiment of this application provides a manner of reporting a transmission branch switching capability of the terminal device, and a configuration of the network device for switching the transmission branch by the terminal device is not limited in the present invention. Usually, the configuration of the network device needs to meet the capability of the terminal device, that is, does not exceed the capability of the terminal device.

FIG. 5 is a diagram of a switching-related band according to an embodiment of this application. As shown in FIG. 5, the terminal device switches a transmission mode in which two transmission branches are used for transmission on the band B to a transmission mode in which one transmission branch is used for transmission on the band A and the other transmission branch is used for transmission on the band C. In this diagram, the terminal is related to three bands: the band A, the band B, and the band C for participating in switching.

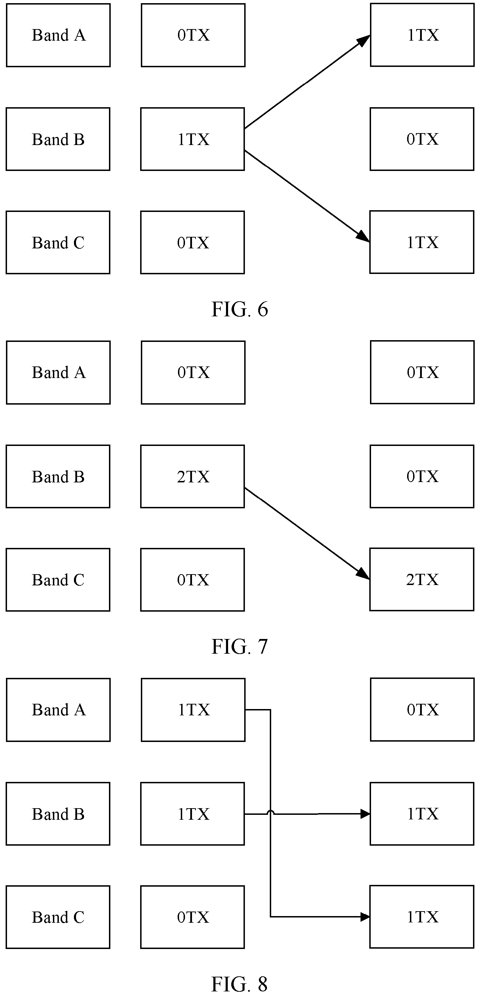

FIG. 6 is a diagram of another switching-related band according to an embodiment of this application. As shown in FIG. 6, the terminal device needs to switch a working state in which data is carried on one transmission branch through a carrier on the band B to a working state in which data is carried on one transmission branch through a carrier on the band A and data is carried on the other transmission branch through a carrier on the band C. In this diagram, the terminal is related to three bands: the band A, the band B, and the band C for participating in switching. However, a quantity of transmission branches used by the terminal device before the switching may be not consistent with a quantity of transmission branches used by the terminal device after the switching.

FIG. 7 is a diagram of another switching-related band according to an embodiment of this application. As shown in FIG. 7, the terminal device supports three bands: the band A, the band B, and the band C for participating in switching. However, in some scenarios, as shown in FIG. 7, the terminal device may alternatively switch a working state in which data is carried on two transmission branches through a carrier on the band B to a working state in which data is carried on two transmission branches through a carrier on the band C. In this diagram, although the terminal supports three bands: the band A, the band B, and the band C for participating in switching, the terminal device may also switch the transmission branch between two bands.

FIG. 8 is a diagram of another switching-related band according to an embodiment of this application. As shown in FIG. 8, the terminal device needs to switch a working state in which data is carried on one transmission branch through a carrier on the band A and data is carried on the other transmission branch through a carrier on the band B to a working state in which data is carried on one transmission branch through the carrier on the band B and data is carried on the other transmission branch through a carrier on the band C. In this diagram, the terminal is related to three bands: the band A, the band B, and the band C for participating in switching, but a related band before the switching may have a same part as a related band after the switching.

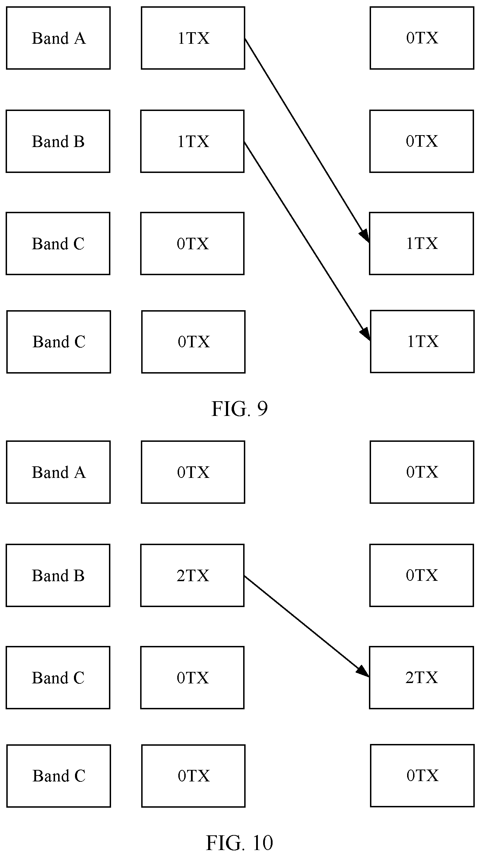

FIG. 9 is a diagram of another switching-related band according to an embodiment of this application. The terminal device needs to switch a working state in which data is carried on one transmission branch through a carrier on the band A and data is carried on the other transmission branch through a carrier on the band B to a working state in which data is carried on one transmission branch through a carrier on the band C and data is carried on the other transmission branch through a carrier on the band D. In this diagram, the terminal is related to four bands: the band A, the band B, the band C, and the band D for participating in switching.

FIG. 10 is a diagram of another switching-related band according to an embodiment of this application. The terminal device supports four bands: the band A, the band B, the band C, and the band D for participating in switching. However, in some scenarios, as shown in FIG. 10, the terminal device may alternatively switch a working state in which data is carried on two transmission branches through a carrier on the band B to a working state in which data is carried on two transmission branches through a carrier on the band C. In this diagram, although the terminal supports four bands: the band A, the band B, the band C, and the band D for participating in switching, the terminal device may also switch the transmission branch between two bands.

It can be learned from the diagrams in FIG. 5 to FIG. 10 that, although the terminal device supports switching, of the transmission branch, that is related to the at least three bands, a quantity of bands related to switching of the transmission branch may be less than a quantity of bands that can be used by the terminal device to switch the transmission branch. Therefore, a quantity, of bands corresponding to the indication information set, reported by the terminal device may be less than a quantity of bands that can be used by the terminal device to switch the transmission branch, and a quantity, of bands of the indication information set, to be reported by the terminal device may be reported as required. This is not limited in this embodiment.

Optionally, the indication information in the indication information set may separately correspond to each band set pair, in other words, a quantity of pieces of indication information is consistent with a quantity of band set pairs. In addition, one piece of indication information may alternatively correspond to at least two band set pairs, in other words, a quantity of pieces of indication information is less than a quantity of band set pairs.

In this embodiment of this application, if pieces of indication information of a plurality of band set pairs are the same, one of the pieces of indication information may correspond to the at least two band set pairs. Therefore, the quantity, of pieces of indication information in the indication information set, reported by the terminal device is less than the quantity of band set pairs, so that signaling overheads for reporting the capability information by the terminal device can be reduced.

In a possible implementation, the terminal device reports a band set pair that meets a preset condition. Optionally, the preset condition may be that there is at least one same band between the two band sets in the band set pair. Optionally, the preset condition may be set as required. This is not limited in this embodiment.

In this embodiment of this application, the terminal device may report the band set pair that meets the constraint condition, to adapt to different reporting scenarios.

It should be understood that, how the network device determines the switching time of the band set pair based on the indication information in the indication information set is related to factors such as specific content of the indication information and the manner of reporting the indication information. Therefore, on a basis of any one of the foregoing application embodiments, the following application embodiments are described based on the factors such as the specific content of the indication information reported by the terminal device and the manner of reporting the indication information by the terminal device, with reference to a manner of determining, by the network device, switching time of each band set pair based on the indication information in the indication information set.

First, the specific content of the indication information reported by the terminal device is used as an example for description, with reference to how the network device determines a switching manner of each band set pair.

Optionally, a function of the indication information includes but is not limited to at least one of the following: indicating the switching time, indicating a band identifier for switching the transmission branch between two band sets in one band set pair, and indicating that the terminal device supports or does not support switching the transmission branch between the two band sets in the band set pair. The indication information is separately described in the following application embodiments.

First, descriptions are provided by using the indication information indicating the switching time.

It should be understood that, if the indication information includes the switching time, when the network device receives the indication information set, if the network device can clearly know the band set pair corresponding to the indication information, the network device may determine the switching time of each band set pair.

In a possible implementation, the switching time is related to a quantity of transmission branches configured on the band in the band set. The terminal device including two transmission branches is used as an example. In this case, the switching time may be further divided into time for switching one transmission branch and time for switching two transmission branches.

For example, for switching time of the terminal device between the band A and concurrent {band B+band C}, assuming that the terminal device includes two transmission branches, when the terminal device performs carrier aggregation transmission on a band set including the band B and the band C, transmission on the carrier on the band B occupies one transmission branch, and transmission on the carrier on the band C occupies the other transmission branch; or when the terminal device performs transmission on the carrier on the band A, transmission on the carrier on the band A by the terminal device may occupy the two transmission branches, or transmission on the carrier on the band A by the terminal device may occupy one of the transmission branches. In this case, switching time associated when transmission on the carrier on the band A by the terminal device occupies the two transmission branches may be different from switching time when transmission on the carrier on the band A by the terminal device occupies one of the transmission branches. Therefore, the switching time is related to the quantity of transmission branches occupied by the band in the band set.

In this embodiment of this application, the switching time is related to the quantity of transmission branches configured on the band in the band set, and the switching time obtained by the network device is also more accurate.

In a possible implementation, when one type of switching times is not reported, it may indicate that such switching is not supported. For example, the example of (2) above may be specifically expressed as follows:
SwtichingTmie (switching time element) ::=CHOICE (select one from the options) {
notSupport (not supported) NULL,
value1T (switching time of 1T switching) ENUMERATED {n0 µs, n30 µs, n100 µs, n140 µs, n200 µs, n300 µs, n500 µs, n900 µs} (pieces of enumerated possible switching time) OPTIONAL (which indicates that the value is optional, where if the value is not displayed, 1T switching is not supported)
value2T (switching time of 2T switching) ENUMERATED {n0 µs, n30 µs, n100 µs, n140 µs, n200 µs, n300 µs, n500 µs, n900 µs} (pieces of enumerated possible switching time) OPTIONAL (which indicates that the value is optional, where if the value is not displayed, 2T switching is not supported)}.

In a possible implementation, the indication information includes the switching time. To enable the network device to determine the switching time of the band set pair, optionally, the indication information further indicates a band identifier for switching the transmission branch between two band sets in one band set pair. In other words, the indication information may include the switching time and the band identifier. In this embodiment of this application, the switching time and the band identifier in the indication information may be associated.

The band set pair 1 in Table 7 is used as an example. In this case, indication information of the band set pair 1 includes switching time of the band set pair 1. In addition, to enable the network device to determine the switching time of the band set pair, the indication information of the band set pair 1 further includes a band identifier of the band A in the first band set, and a band identifier of the band B and a band identifier of the band C in the second band set. Usually, a band identifier is unique, so that different bands are accurately distinguished. Optionally, the band identifier of the band may be determined based on an order of bands in a band combination. The band combination is a band combination supporting switching of the transmission branch. In a possible implementation, the band combination is a band combination reported by using a BandCombinationList-UplinkTxSwitch field. The band combination includes a plurality of bands on which the terminal can switch the transmission branch. For example, Table 7 is used as an example. If in the band combination, an order of bands is the band A, the band B, the band C, and the band D, the band identifier of the band A is 00, the band identifier of the band B is 01, the band identifier of the band C is 10, and a band identifier of the band D is 11.

It should be understood that, for indication information of the band set pair 2 and indication information of the band set pair 3 in Table 7, refer to the descriptions of the indication information of the band set pair 1. Details are not described in this embodiment of this application.

Specifically, because the indication information indicates the band identifier in the first band set and the band identifier in the second band set in the band set, when receiving the indication information, the network device may determine a specific band set pair based on the band identifier, to determine the associated band set pair and the switching time. Therefore, it can be learned that the network device may determine the switching time of the N band set pairs based on the switching time and the band identifier that are indicated by the indication information.

In this embodiment of this application, because the band in the band set may be directly indicated by using the indication information, the switching time of the band set pair is determined, thereby reducing difficulty in determining the switching time by the network device.

It should be noted that the band identifiers in the indication information may be distinguished based on the band set, or may not be distinguished. This is not limited in this embodiment of this application.

For example, if the band identifiers in the indication information are distinguished based on the band set, the indication information may be expressed as shown in Table 8:

**Table 8**

| Band set pair | First band set | Second band set | Switching time (µs) |
|---|---|---|---|
| Band set pair 1 | Band A+band B | Band C | T1 |
| Band set pair 2 | Band A+band B | Band D | T2 |
| Band set pair 3 | Band A+band B | Band C+band D | T3 |
| Band set pair 4 | Band A | Band B | T4 |

As shown in Table 8, the first band set is a band set before switching, and the second band set is a band set after switching. The band set pair 1 is used as an example. One band set of the band set pair 1 includes the band A and the band B, the other band set includes the band C, and the switching time of the band set pair 1 is T1. Similarly, the band set pair 1 is used as an example. One band set of the band set pair 1 includes the band A and the band B, the other band set includes the band D, and the switching time of the band set pair 1 is T2. Similarly, for the band set pair 3 and the band set pair 4, refer to the descriptions of the band set pair 1 and the band set pair 2. Details are not described again. It should be understood that, if the band identifiers in the indication information are distinguished based on the band set, the switching time indicated by the indication information is also more accurate. It should be specially emphasized that, in the solution shown in Table 8, the second band set may alternatively be a band set before switching, and the first band set may be a band set after switching. Details are not described herein again. Switching time for switching from the first band set to the second band set may be the same as or different from switching time for switching from the second band set to the first band set. Further, if the switching time for switching from the first band set to the second band set is different from the switching time for switching from the second band set to the first band set, the indication information indicates the band set before switching and the band set after switching. For example, if the band identifiers in the indication information are not distinguished based on the band set, that is, the indication information indicates the band included in the band set pair, the first band set and the second band set do not need to be distinguished. In other words, if the indication information indicates switching of the transmission branch between the bands (for example, the band A, the band B, and the band C) in the band set pair, the indication information may be expressed as shown in Table 9:

**Table 9**

| Band set pair | Switching time (µs) |
|---|---|
| Band A+band B+band C | T1 |
| Band A+band B+band D | T2 |
| Band A+band B+band C+band D | T3 |

As shown in Table 9, the pieces of switching time of the band set pair related to the band A, the band B, and the band C are all T1. It should be understood that the band identifier in the indication information does not distinguish the band set to which the band identifier belongs, so that signaling overheads of the indication information can be reduced.

As shown in Table 9, a 1^{st} band set pair is used as an example. In this case, pieces of switching time for switching the transmission branch of the terminal device between the carrier on the band A and the carrier on concurrent {band B and band C}, switching between the carrier on concurrent {band A and band B} and the carrier on the band C, and switching between the carrier on concurrent {band A+band C} and the carrier on the band B are the same, and the same switching time is T1. Similarly, pieces of switching time of the band set pair related to the band A, the band B, and the band D are all T2, and pieces of switching time of the band set pair related to the band A, the band B, the band C, and the band D are all T3.

For example, the band identifier in the indication information does not distinguish the band set to which the band identifier belongs, and the indication information set reported by the terminal device may also be shown in Table 10:

**Table 10**

| 1 | 2 | 3 | 4 | 5 | 6 | 7 | 8 | 9 | 10 | 11 |
|---|---|---|---|---|---|---|---|---|---|---|
| AB | AC | AD | BC | BD | CD | ABC | ABD | ACD | BCD | ABCD |
| T1 | Not supported | T2 | T3 | T4 | T5 | T6 | T7 | T8 | T9 | T10 |

Optionally, in this embodiment of this application, the time in Table 10 may be reported in a preset order. There is a preset order herein. However, the band set pair corresponding to each order does not need to distinguish the band set, and only the band corresponding to the band set pair needs to be reported. Therefore, "not supported" needs to be reported, and reporting of "not supported" is also for ensuring order consistency.

As shown in Table 10, a 1^{st} row indicates the preset order of the N band set pairs, a 2^{nd} row indicates the band corresponding to the band set pair, and a 3^{rd} row indicates the indication information set. The indication information in the indication information set may indicate the switching time, and may further indicate that the terminal device supports or does not support switching the transmission branch on the associated band set pair. "Not supported" indicates that the terminal device does not support switching the transmission branch between the band A and the band C, and T1, T2, ..., and T10 indicate pieces of switching time for switching the transmission branch between the bands corresponding to the band set pair. The terminal device reports the capability information of the terminal device to the network device based on a preset correspondence between the N band set pairs and the pieces of indication information in the indication information set, where an order of the pieces of indication information in the indication information set is the same as a preset order of the N band set pairs. As shown in Table 10, bands included in a 1^{st} band set pair include the band A and the band B, corresponding indication information indicates that the terminal device supports switching of the transmission branch on the associated band set pair, and switching time is T1; bands included in a 2^{nd} band set pair include the band A and the band C, and corresponding indication information indicates that the terminal device supports switching of the transmission branch on the associated band set; and so on. In this way, the terminal device reports only an indication information set in a 3^{rd} row, and does not need to report the band identifier in the band set pair corresponding to the indication information in the indication information set, and the network device may determine, based on a preset order of the band set pairs, the band set pair associated with each piece of indication information in the indication information set. Therefore, signaling overheads can be reduced.

In a possible implementation, the indication information indicates that pieces of switching time associated with M band set pairs in the N band set pairs are the same, each of the M band set pairs includes same bands, and 2≤M.

In this embodiment of this application, the indication information indicates that the pieces of switching time associated with the M band set pairs in the N band set pairs are the same, each of the M band set pairs includes same bands, and 2≤M. In this case, when reporting the capability information, the terminal device may report only one same piece of switching time, and does not need to report pieces of switching time for all band set pairs. Therefore, it can be learned that a quantity of pieces of switching time in the capability information is less than N, so that in this embodiment of this application, overheads of signaling between the terminal device and the network device can be reduced.

In a possible implementation, 2≤N. In this case, the terminal device reports an indication information set of at least two band set pairs. The N band set pairs are associated with one band combination, and the band combination includes bands in the N band set pairs supported by the terminal device.

For example, at least two band set pairs in one band combination may be shown in Table 11:

**Table 11**

| | | | |
|---|---|---|---|
| Band combination (band A, band B, band C, and band D) | Band set pair 1 (band A, band B, and band C) | First band set (band A) | Second band set (band B and band C) |
| | Band set pair 2 (band A, band B, and band D) | First band set (band A and band B) | Second band set (band B and band D) |
| | Band set pair 3 (band B, band C, and band D) | First band set (band B and band C) | Second band set (band D) |

As shown in Table 11, the band set pair 1, the band set pair 2, and the band set pair 3 are associated with one band combination, and the band combination includes the band A, the band B, the band C, and the band D.

The band combination including four bands and the terminal device including two transmission branches are used as an example. Because there are a maximum of four bands, an order number of the band in the band combination may be indicated by using 2 bits. For example, 0 represents a 1^{st} band and 1 represents a 2^{nd} uplink band in the band combination. Assuming that the switching time supports eight options (for example, 10 µs, 20 µs, 50 µs, and 100 µs), three bits are required.

The switching time of the band set pair is reported. If there are at least three bands in each band set pair, minimum overheads required for reporting switching time of a group of band set pairs are: 2 bits (band A)+2 bits (band B)+2 bits (band C)+3 bits (x µs)=9 bits. If there are at least two bands in each band set pair, minimum overheads required for reporting switching time of a group of band set pairs are: 2 bits (band A)+2 bits (band B)+3 bits (x µs)=7 bits. If one band set pair is related to switching of four bands, overheads of 11 bits required by the band set pair are reported.

Assuming that a quantity of bands in each band set pair is greater than or equal to two, a case of the band set pair that needs to be reported may be shown in Table 12:

**Table 12**

| | Aⱼ | Bⱼ | Cⱼ | Dⱼ | (AB)ⱼ | (AC)ⱼ | (AD)ⱼ | (BC)ⱼ | (BD)ⱼ | (CD)ⱼ |
|---|---|---|---|---|---|---|---|---|---|---|
| Aⱼ | Invalid | 1 | 2 | 3 | 4 | 5 | 6 | 7 | 8 | 9 |
| Bᵢ | Invalid | Invalid | 10 | 11 | 12 | 13 | 14 | 15 | 16 | 17 |
| Cᵢ | Invalid | Invalid | Invalid | 18 | 19 | 20 | 21 | 22 | 23 | 24 |
| Dᵢ | Invalid | Invalid | Invalid | Invalid | 25 | 26 | 27 | 28 | 29 | 30 |
| (AB)ᵢ | Invalid | Invalid | Invalid | Invalid | Invalid | 31 | 32 | 33 | 34 | 35 |
| (AC)ᵢ | Invalid | Invalid | Invalid | Invalid | Invalid | Invalid | 36 | 37 | 38 | 39 |
| (AD)ᵢ | Invalid | Invalid | Invalid | Invalid | Invalid | Invalid | Invalid | 40 | 41 | 42 |
| (BC)ᵢ | Invalid | Invalid | Invalid | Invalid | Invalid | Invalid | Invalid | Invalid | 43 | 44 |
| (BD)ᵢ | Invalid | Invalid | Invalid | Invalid | Invalid | Invalid | Invalid | Invalid | Invalid | 45 |
| (CD)ᵢ | Invalid | Invalid | Invalid | Invalid | Invalid | Invalid | Invalid | Invalid | Invalid | Invalid |

Table 12 may be expressed as follows: Each element in a 1^{st} row represents a band set on which the terminal device performs uplink transmission at a first moment, and each element in a 1^{st} column represents a band set on which the terminal performs uplink transmission at a second moment; and in comparison with the first moment, the terminal device switches an uplink transmit branch between the two band sets at the second moment (or a row represents a state after switching, and a column represents a state before switching). If a cell is filled with "invalid", the value does not need to be reported for pairing (for example, if a state of a diagonal cell does not change before and after the switching, and pairing of a lower triangle is completely repeated with pairing of an upper triangle, pieces of corresponding switching time are consistent; and assuming that switching time for switching from A to B is the same switching time for switching from B to A, reporting does not need to be performed).

As shown in Table 12, about 45*10 bits=450 bits are required for reporting 45 scenarios.

Assuming that a quantity of bands in each band set pair is greater than or equal to three, a case of the band set pair that needs to be reported may be shown in Table 13:

**Table 13**

| | Aⱼ | Bⱼ | Cⱼ | Dⱼ | (AB)ⱼ | (AC)ⱼ | (AD)ⱼ | (BC)ⱼ | (BD)ⱼ | (CD)ⱼ |
|---|---|---|---|---|---|---|---|---|---|---|
| Aⱼ | Invalid | Invalid | Invalid | Invalid | 1 | 2 | 3 | 4 | 5 | 6 |
| Bᵢ | Invalid | Invalid | Invalid | Invalid | 7 | 8 | 9 | 10 | 11 | 12 |
| Cᵢ | Invalid | Invalid | Invalid | Invalid | 13 | 14 | 15 | 16 | 17 | 18 |
| Dᵢ | Invalid | Invalid | Invalid | Invalid | 19 | 20 | 21 | 22 | 23 | 24 |
| (AB)ᵢ | Invalid | Invalid | Invalid | Invalid | Invalid | 25 | 26 | 27 | 28 | 29 |
| (AC)ᵢ | Invalid | Invalid | Invalid | Invalid | Invalid | Invalid | 30 | 31 | 32 | 33 |
| (AD)ᵢ | Invalid | Invalid | Invalid | Invalid | Invalid | Invalid | Invalid | 34 | 35 | 36 |
| (BC)ᵢ | Invalid | Invalid | Invalid | Invalid | Invalid | Invalid | Invalid | Invalid | 37 | 38 |
| (BD)ᵢ | Invalid | Invalid | Invalid | Invalid | Invalid | Invalid | Invalid | Invalid | Invalid | 39 |
| (CD)ᵢ | Invalid | Invalid | Invalid | Invalid | Invalid | Invalid | Invalid | Invalid | Invalid | Invalid |

As shown in Table 13, about 39*10 bits=390 bits are required for reporting 39 scenarios.

For example, "invalid" in the foregoing table may be represented as "NULL" or "default".

In the foregoing application embodiment, some descriptions are provided by using the indication information indicating the switching time.

Second, descriptions are provided by using the indication information indicating a band identifier for switching the transmission branch between two band sets in one band set pair.

It should be understood that if the indication information in the indication information set reported by the terminal device indicates the band identifier for switching the transmission branch between the two band sets in the band set pair, but does not indicate the switching time, the network device needs to determine the switching time of the band set pair through a specific means based on the band identifier indicated by the indication information.

In the following application embodiments, how the network device determines the switching time of the band set pair based on the band identifier indicated by the indication information is described. For ease of description, a band set pair including two bands is referred to as a first band set pair, and a band set pair including at least three bands is referred to as a second band set pair.

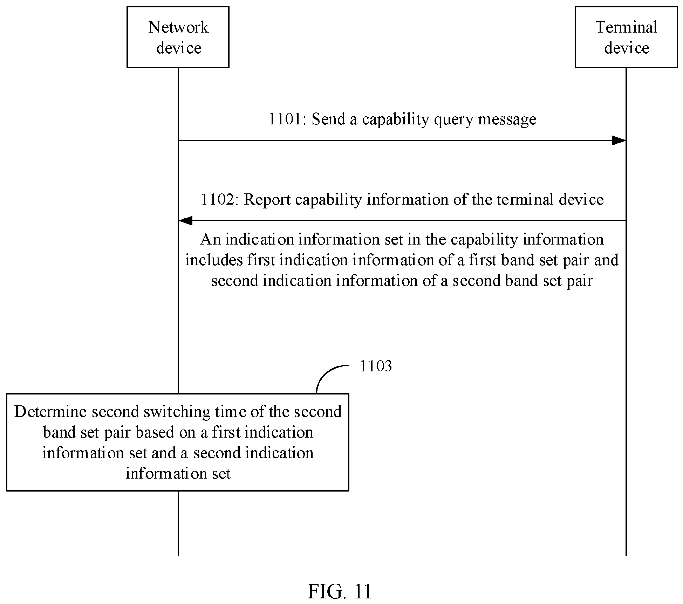

FIG. 11 is a schematic flowchart of another communication method according to an embodiment of this application. The communication method provided in this embodiment of this application includes step 1101 to step 1103.

1101: A network device sends a capability query message to a terminal device.

1102: The terminal device reports capability information of the terminal device to the network device, where an indication information set in the capability information includes first indication information of a first band set pair and second indication information of a second band set pair.

The first indication information indicates first switching time for the terminal device to switch a transmission branch between two band sets in the first band set pair. The second indication information indicates switching of the transmission branch performed by the terminal between two band sets in the second band set pair.

In this embodiment of this application, the first band set pair includes two bands, in other words, the first band set pair is related to switching between the two bands; and the second band set pair includes at least three bands, in other words, the second band set pair is related to switching between the at least three bands.

1103: The network device determines second switching time of the second band set pair based on a first indication information set and a second indication information set.

The first band set pair is related to switching between the two bands, and the second band set pair is related to switching between the at least three bands, in other words, in this embodiment of this application, the switching time for switching the transmission branch between the at least three bands is determined based on the switching time between the two bands.

In this embodiment of this application, if the first indication information indicates the first switching time of the first band set pair of the terminal device, and the second indication information does not indicate the second switching time of the second band set pair, in other words, the first switching time of the first band set pair is known to the network device, and the network device may learn, by using a band identifier indicated by the second indication information, of the second band set pair on which the terminal device can switch the transmission branch, the second switching time of the second band set pair is determined by using the first switching time indicated by the first indication information. In this embodiment of this application, the second indication information indicates the band identifier of the second band set pair and does not indicate the second switching time. Therefore, an information amount of the second switching time is reduced in the capability information reported by the terminal device to the network device. It can be learned that overheads of signaling between the terminal device and the network device are reduced. In addition, the network device may determine the second switching time of the second band set pair based on the first switching time indicated by the first indication information. Therefore, the network device may learn of the first switching time of the first band set pair and the second switching time of the second band set pair, in other words, the network device may learn of the switching time of the band set pair. It can be learned that in this embodiment of this application, overheads of signaling between the terminal device and the network device are reduced, and the network device can further learn of the switching time of the band set pair.

In a possible implementation, the second switching time of the second band set pair is related to time for the terminal device to switch the transmission branch between any band in one band set and any band in the other band set in the second band set pair.

For example, assuming that the second band set pair is related to switching scenarios of a band A, a band B, a band C, and a band D, and the terminal device has two transmission branches, the second band set pair includes but is not limited to the following several cases:
Case 1: A first band set in the second band set pair includes the band A and the band B, and a second band set in the second band set pair includes the band C and the band D.
Case 2: A first band set in the second band set pair includes the band A and the band C, and a second band set in the second band set pair includes the band B and the band D.
Case 3: A first band set in the second band set pair includes the band A and the band D, and a second band set in the second band set pair includes the band B and the band C.

Assuming that the second band set pair is related to switching scenarios of a band A, a band B, and a band C, and the terminal device has two transmission branches, the second band set pair includes but is not limited to the following several cases:
Case 4: A first band set in the second band set pair includes the band A and the band B, and a second band set in the second band set pair includes the band C.
Case 5: A first band set in the second band set pair includes the band A and the band C, and a second band set in the second band set pair includes the band B.
Case 6: A first band set in the second band set pair includes the band B and the band C, and a second band set in the second band set pair includes the band A.

Case 1 is used as an example. In this case, switching time related to the second switching time of the second band set pair may be shown in Table 14:

**Table 14**

| | |
|---|---|
| Band A/Band C | 20 µs |
| Band A/Band D | 50 µs |
| Band B/Band C | 30 µs |
| Band B/Band D | 35 µs |

Specifically, as shown in Table 14, the second switching time of the second band set pair in Case 1 is related to the switching time 20 µs between the band A and the band C, the switching time 50 µs between the band A and the band D, the switching time 30 µs between the band B and the band C, and the switching time 35 µs between the band B and the band D.

Case 4 is used as an example. In this case, switching time related to the second switching time of the second band set pair may be shown in Table 15:

**Table 15**

| | |
|---|---|
| Band A/Band C | 20 µs |
| Band B/Band C | 30 µs |

Specifically, as shown in Table 15, the second switching time of the second band set pair in Case 4 is related to the switching time 20 µs between the band A and the band C and the switching time 30 µs between the band B and the band C.

**In** a possible implementation, the switching time of the band set pair is maximum time for the terminal device to switch the transmission branch between any band in one band set and any band in the other band set in the band set pair.

Case 1 is used as an example. **In** this case, the switching time of the second band set pair in Case 1 is 50 µs.

Case 4 is used as an example. **In** this case, the switching time of the second band set pair in Case 4 is 30 µs.

**In** this embodiment of this application, after learning of a switching time capability of the terminal device, the network device may determine that the terminal device does not send uplink signaling or data in the switching time for switching the transmit branch between the two band sets in the band set pair, instead of not receiving the uplink signaling or data due to a poor channel condition or the like; and the network device does not allocate an uplink resource or schedule uplink transmission in the switching time either, so that a waste of radio resources can be avoided.

Because the network device considers that the terminal device does not have a capability of sending uplink signaling or data in the switching time, the network device does not schedule uplink transmission. Therefore, a meaning of using a maximum value is that if the switching time considered by the network device is less than time in which the terminal device actually switches the transmission branch, the network device may allocate an uplink resource in time in which the terminal device cannot send uplink data, and schedule uplink transmission, causing a waste of radio resources. When the network device does not receive, on the scheduled uplink resource, the uplink data sent by the terminal device, the network device mistakenly considers that a channel condition is poor, and consequently adjusts a current scheduling policy to a more conservative scheduling policy (for example, a lower-order MCS (modulation and coding scheme, modulation and coding scheme)), causing a reduction in an uplink data rate. Therefore, the maximum time is used as the switching time of the band set pair, so that the uplink data rate can be further improved.

In this embodiment of this application, the embodiment of determining switching time of three bands based on two bands may be used in combination with another embodiment. To be specific, the terminal device may report the indication information (not report the band identifier) in a preset order, or may report the band identifier of the band set pair. Descriptions are provided by using the indication information indicating that the terminal device supports or does not support switching the transmission branch between the two band sets in the band set pair. Optionally, the indication information includes a support identifier of the band set pair and a non-support identifier of the band set pair.

In this embodiment of this application, the indication information indicates that the terminal device supports or does not support switching the transmission branch between the two band sets in the band set pair. In this case, the network device may learn of a band set pair supported by the terminal device and a band set pair not supported by the terminal device. Based on this, the network device may control the terminal device to perform switching in the supported band set pair.

It should be noted that if the terminal device reports the capability information of the terminal device to the network device based on the preset correspondence between the N band set pairs and the pieces of indication information in the indication information set, an objective of reporting the band set pair supported and the band set pair not supported in the N band set pairs herein is mainly to ensure that the one-to-one correspondence between the N band set pairs and the N pieces of indication information in the indication information set is not disordered.

Optionally, the support identifier and the non-support identifier may be reported together with the band identifier and the switching time, or may be reported separately, in other words, only the support identifier and the non-support identifier may be reported, and the band identifier and the switching time are not reported.

In a possible implementation, the indication information indicates only the band set pair supported by the terminal device or the band set pair not supported by the terminal device.

In this embodiment of this application, the indication information indicates only the band set pair supported by the terminal device or the band set pair not supported by the terminal device, in other words, the indication information does not indicate a case in which the band set pair is supported or not supported. Therefore, signaling overheads for reporting the capability information by the terminal device can be reduced.

In a possible implementation, whether the indication information indicates the band set pair supported by the terminal device or the band set pair not supported by the terminal device is related to a quantity of band set pairs supported by the terminal device and a quantity of band set pairs not supported by the terminal device.

Optionally, when the quantity of band set pairs supported by the terminal device is greater than the quantity of band set pairs not supported by the terminal device, the indication information indicates the band set pair not supported by the terminal device; or when the quantity of band set pairs supported by the terminal device is less than the quantity of band set pairs not supported by the terminal device, the indication information indicates the band set pair supported by the terminal device.

In this embodiment of this application, a small quantity of band set pairs supported by the terminal device and a small quantity of band set pairs not supported by the terminal device are selected for reporting. In this case, the indication information indicates that the quantity of band set pairs supported by the terminal device or the indication information indicates that the quantity of band set pairs not supported by the terminal device is less than N/2, thereby reducing signaling overheads for reporting the capability information by the terminal device.

In the foregoing application embodiments, specific content of the indication information reported by the terminal device is used as an example for description, with reference to how the network device determines a switching manner of each band set pair. On a basis of any one of the foregoing application embodiments, the following application embodiments are described by using an example of a manner of reporting the indication information by the terminal device, with reference to how the network device determines a switching manner of each band set pair.

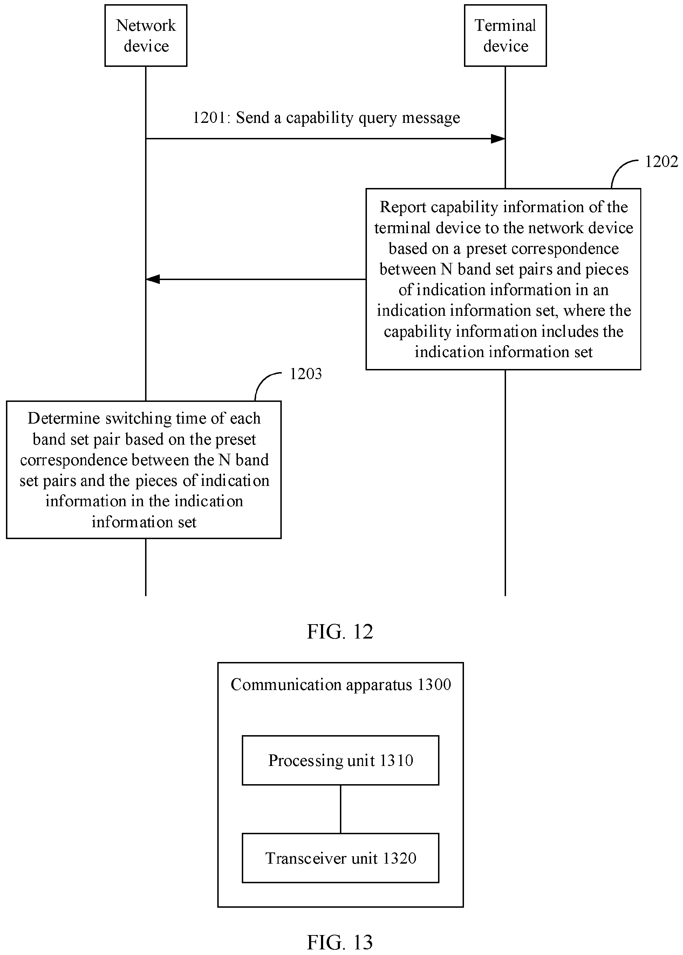

FIG. 12 is a schematic flowchart of another communication method according to an embodiment of this application. The communication method provided in this embodiment of this application includes step 1001 to step 1003.

1201: A network device sends a capability query message to a terminal device.

1202: The terminal device reports capability information of the terminal device to the network device based on a preset correspondence between N band set pairs and pieces of indication information in an indication information set, where the capability information includes the indication information set.

In a possible implementation, the correspondence is related to a preset order of the N band set pairs.

Optionally, an order of the pieces of indication information in the indication information set is the same as the preset order of the N band set pairs.

In a possible implementation, there is a correspondence between the preset order of the N band set pairs and an arrangement order of N elements in a first preset table. It should be noted that in this embodiment of this application, there are at least N elements in the first preset table.

In a possible implementation, an element in an i^{th} row and a j^{th} column in the first preset table is Eij, all elements Eij in the N elements are sequentially arranged in ascending order of columns and rows, there is a correspondence between a band set pair, in the N band set pairs, that includes an i^{th} band set and a j^{th} band set and the element Eij in the table, j is greater than i, 1≤i≤K, j≤K, K, i, and j are all positive integers, and K is a quantity of band sets associated with a band combination.

Optionally, K band sets include any Q bands in P bands in the band combination, the K band sets are arranged in a preset order in the first preset table, and Q is a positive integer. Usually, Q is less than or equal to a quantity of transmission branches, and Q is less than or equal to P.

For example, if each band set pair includes at least two bands, the first preset table may be shown in Table 16:

**Table 16**

| | | 1 | 2 | 3 | 4 | 5 | 6 | 7 | 8 | 9 | 10 |
|---|---|---|---|---|---|---|---|---|---|---|---|
| i | | A | B | C | D | AB | AC | AD | BC | BD | CD |
| 1 | A | Invalid | 1 | 2 | 3 | 4 | 5 | 6 | 7 | 8 | 9 |
| 2 | B | Invalid | Invalid | 10 | 11 | 12 | 13 | 14 | 15 | 16 | 17 |
| 3 | C | Invalid | Invalid | Invalid | 18 | 19 | 20 | 21 | 22 | 23 | 24 |
| 4 | D | Invalid | Invalid | Invalid | Invalid | 25 | 26 | 27 | 28 | 29 | 30 |
| 5 | AB | Invalid | Invalid | Invalid | Invalid | Invalid | 31 | 32 | 33 | 34 | 35 |
| 6 | AC | Invalid | Invalid | Invalid | Invalid | Invalid | Invalid | 36 | 37 | 38 | 39 |
| 7 | AD | Invalid | Invalid | Invalid | Invalid | Invalid | Invalid | Invalid | 40 | 41 | 42 |
| 8 | BC | Invalid | Invalid | Invalid | Invalid | Invalid | Invalid | Invalid | Invalid | 43 | 44 |
| 9 | BD | Invalid | Invalid | Invalid | Invalid | Invalid | Invalid | Invalid | Invalid | Invalid | 45 |
| 10 | CD | Invalid | Invalid | Invalid | Invalid | Invalid | Invalid | Invalid | Invalid | Invalid | Invalid |

With reference to Table 16, it can be learned that the indication information set may include 45 pieces of indication information. For example, one band set in a band set pair corresponding to a 25^{th} piece of indication information includes a band A and a band B, and the other band set in the band set pair corresponding to the 25^{th} piece of indication information includes a band D. For another example, one band set in a band set pair corresponding to a 36^{th} piece of indication information includes a band A and a band C, and the other band set in the band set pair corresponding to the 36^{th} piece of indication information includes a band A and a band D.

It should be understood that a band set pair corresponding to any piece of indication information in the indication information set may be determined by using the first preset table. Details are not described in this embodiment of this application.

In other words, the terminal device may report the capability information based on the first preset table, so that each piece of indication information in the indication information set corresponds to the element in the first preset table.

Optionally, if each band set pair includes at least three bands, the first preset table may be shown in Table 17:

**Table 17**

| | j | 1 | 2 | 3 | 4 | 5 | 6 | 7 | 8 | 9 | 10 |
|---|---|---|---|---|---|---|---|---|---|---|---|
| i | | A | B | C | D | AB | AC | AD | BC | BD | CD |
| 1 | A | Invalid | Invalid | Invalid | Invalid | 1 | 2 | 3 | 4 | 5 | 6 |
| 2 | B | Invalid | Invalid | Invalid | Invalid | 7 | 8 | 9 | 10 | 11 | 12 |
| 3 | C | Invalid | Invalid | Invalid | Invalid | 13 | 14 | 15 | 16 | 17 | 18 |
| 4 | D | Invalid | Invalid | Invalid | Invalid | 19 | 20 | 21 | 22 | 23 | 24 |
| 5 | AB | Invalid | Invalid | Invalid | Invalid | Invalid | 25 | 26 | 27 | 28 | 29 |
| 6 | AC | Invalid | Invalid | Invalid | Invalid | Invalid | Invalid | 30 | 31 | 32 | 33 |
| 7 | AD | Invalid | Invalid | Invalid | Invalid | Invalid | Invalid | Invalid | 34 | 35 | 36 |
| 8 | BC | Invalid | Invalid | Invalid | Invalid | Invalid | Invalid | Invalid | Invalid | 37 | 38 |
| 9 | BD | Invalid | Invalid | Invalid | Invalid | Invalid | Invalid | Invalid | Invalid | Invalid | 39 |
| 10 | CD | Invalid | Invalid | Invalid | Invalid | Invalid | Invalid | Invalid | Invalid | Invalid | Invalid |

With reference to Table 17, it can be learned that the indication information set may include 39 pieces of indication information. For example, one band set in a band set pair corresponding to a 25^{th} piece of indication information includes a band A and a band B, and the other band set in the band set pair corresponding to the 25^{th} piece of indication information includes a band A and a band C. For another example, one band set in a band set pair corresponding to a 36^{th} piece of indication information includes a band A and a band D, and the other band set in the band set pair corresponding to the 36^{th} piece of indication information includes a band C and a band D.

1203: The network device determines switching time of each band set pair based on a preset correspondence between the N band set pairs and the pieces of indication information in the indication information set.

Because the capability information is reported by the terminal device based on a correspondence between the band set pair and the indication information, if the network device learns of the correspondence, the network device can also learn of the band set pair corresponding to each piece of indication information in the indication information set, to determine the switching time of the band set pair.

In this embodiment of this application, because there is the correspondence between the indication information in the indication information set and the band set pair, the network device may determine, based on the correspondence, a band set pair corresponding to each piece of indication information in the indication information set. In other words, even if the indication information does not indicate a band identifier, the network device can determine the band set pair corresponding to the indication information, and the band identifier does not need to be indicated, so that a data amount required for indicating the band identifier by the indication information is reduced. Therefore, it can be learned that overheads of signaling between the terminal device and the network device are reduced.

In a possible implementation, the correspondence is related to a preset order of the N band set pairs.

Optionally, an order of the pieces of indication information in the indication information set is the same as the preset order of the N band set pairs.

In a possible implementation, there is a correspondence between the preset order of the N band set pairs and an arrangement order of N elements in a second preset table.

In a possible implementation, an element in an i^{th} row and a j^{th} column in the second preset table is Eij, all elements Eij in the N elements are sequentially arranged in ascending order of columns and rows, there is a correspondence between a band set pair, in the N band set pairs, that includes an i^{th} band set and a j^{th} band set and the element Eij in the table, j is greater than i, 1≤i≤K, j≤K, K, i, and j are all positive integers, and K is a quantity of band sets associated with the band combination.

It should be understood that the second preset table may be the same as the first preset table, and the network device and the terminal device may determine, based on a same preset table, a band set pair corresponding to each piece of indication information in the indication information set.

Specifically, if each band set pair includes at least two bands, the second preset table may be shown in Table 16; or if each band set pair includes at least three bands, the second preset table may be shown in Table 17.

In this embodiment of this application, a function of the indication information includes but is not limited to at least one of the following: indicating the switching time and indicating that the terminal device supports or does not support switching the transmission branch between the two band sets in the band set pair. The indication information is separately described in the following application embodiments.

First, descriptions are provided by using an example in which the indication information indicates the switching time.

An example in which the terminal device includes two transmission branches is used for description with reference to Table 16.
(1) First, a total quantity of elements (namely, a quantity of rows/columns in the table) is determined. Assuming that the band combination includes P bands in total, a quantity of elements is a sum of a quantity (P) of first band sets including one band, a quantity (P*(P-1)/2) of first band sets including two bands, ..., and a quantity of first band sets including (P-1) bands. Assuming that the terminal device supports two transmission branches, the band set includes a maximum of two bands. That is, a total quantity of elements is a sum of a quantity of band sets including one band and a quantity of band sets including two bands. P=4 is used as an example. A quantity of elements in the first band set is K=10. (A, B, C, D, AB, AC, AD, BC, BD, CD).
(2) Then, switching time from each element to remaining elements is determined. Switching time for switching a 1^{st} element A to remaining (K-1) elements is determined, switching time for switching a 2^{nd} element B to remaining (K-2) elements is reported, and so on. A total of R pieces of switching time are reported, and R=K*(K-1)/2.

Therefore, it may be determined that a length of the indication information set is R=K*(K-1)/2. P=4 is used as an example. K=10, and R=45.

With reference to Table 16, it can be learned that the indication information set reported by the terminal device may be shown as follows:
{T1, T2, T3, ..., T44, T45}.

With reference to Table 17, it can be learned that the indication information set reported by the terminal device may be shown as follows:
{T1, T2, T3, ..., T38, T39}.

When receiving the indication information set, the network device may determine, by using the second preset table, elements corresponding to each piece of switching time, to determine a band set pair corresponding to each piece of switching time.

In a possible implementation, the indication information may further indicate that the terminal device supports or does not support switching the transmission branch between the two band sets in the band set pair. Specifically, for how to express that the terminal device supports or does not support switching the transmission branch between the two band sets in the band set pair, refer to the descriptions in the foregoing embodiments. Details are not described herein again.

With reference to Table 16, it can be learned that the indication information set reported by the terminal device may be shown as follows:
{T1, not supported, T3, ..., T44, T45}.

In this example, a non-support identifier is at a second location in the indication information set. Correspondingly, with reference to Table 16, it can be learned that one band set in a band set pair corresponding to the second location includes the band A, and the other band set in the band set pair corresponding to the second location includes the band C. In other words, the terminal device does not support switching the transmission branch between the band A and the band C.

With reference to Table 17, it can be learned that the indication information set reported by the terminal device may be shown as follows:
{T1, not supported, T3, ..., T38, T39}.

In this example, a non-support identifier is at a second location in the indication information set. Correspondingly, with reference to Table 17, it can be learned that one band set in a band set pair corresponding to the second location includes the band A, and the other band set in the band set pair corresponding to the second location includes the band A and the band C. In other words, the terminal device does not support switching the transmission branch between the band A and the band A+the band C.

In this embodiment of this application, when the terminal device reports the switching time based on the correspondence, the terminal device reports the non-support identifier for the band set pair not supported by the terminal device, so that a data length of the indication information set does not change, and a band set pair corresponding to each piece of indication information in the entire indication information set is not disordered.

Then, the indication information indicates that the terminal device supports or does not support switching the transmission branch between the two band sets in the band set pair.

With reference to Table 16, it can be learned that the indication information set reported by the terminal device may be shown as follows:
{110101100110011011100011010101010011000111111}.

In this example, if a 10^{th} piece of indication information is 1, it indicates that the terminal device supports switching. With reference to Table 16, it can be learned that one band set in a band set pair corresponding to the 10^{th} piece of indication information includes the band B, and one band set in the band set pair corresponding to the 10^{th} piece of indication information includes the band C. In other words, the terminal device supports switching the transmission branch between the band A and the band B. Similarly, if a 39^{th} piece of indication information is 0, it indicates that the terminal device does not support switching. With reference to Table 17, it can be learned that one band set in a band set pair corresponding to the 39^{th} piece of indication information includes the band A and the band C, and one band set in the band set pair corresponding to the 39^{th} piece of indication information includes the band C and the band D. In other words, the terminal device does not support switching the transmission branch between the band A+the band C and the band C+the band D.

With reference to Table 17, it can be learned that the indication information set reported by the terminal device may be shown as follows:
{110101100110011011100011010101010011000}.

In this example, if a 6^{th} piece of indication information is 1, it indicates that the terminal device supports switching. With reference to Table 17, it can be learned that one band set in a band set pair corresponding to the 6^{th} piece of indication information includes the band A, and the other band set in the band set pair corresponding to the 6^{th} piece of indication information includes the band C and the band D. In other words, the terminal device supports switching the transmission branch between the band A and the band C+the band D.

In this embodiment of this application, the terminal device may report the indication information set to the network device based on the first preset table, depending on whether the terminal device supports or does not support the band set pair. In this case, the network device may determine, based on the indication information set and with reference to the second preset table, the band set pair supported by the terminal device, to determine the switching time of the band set pair supported by the terminal device.

It should be understood that, for a band set pair related to at least three bands, if the indication information of the band set pair related to the at least three bands does not indicate the switching time, for how the network device determines the switching time of the band set pair related to the at least three bands, refer to the descriptions in the application embodiment corresponding to FIG. 6. Details are not described herein again.

In a possible implementation, for an uplink service, if a downlink service of the terminal device is affected, a number of an affected downlink band may also be reported when switching time is reported. For example, for a scenario in which the band A+the band B is switched to the band C, switching time for reporting is 20 µs, and it may be indicated that this time of switching affects transmission on the downlink band B and the downlink band C.

In this embodiment of this application, a purpose of reporting, by the terminal to the network device, the downlink band for downlink transmission affected by the uplink transmit branch switching is to enable the network device to learn that the terminal device cannot receive downlink signaling and data in the switching time. Therefore, the network device does not send the downlink signaling and the data in the switching time, to avoid a packet loss.

It can be understood that, to implement functions in the foregoing application embodiments, the base station and the terminal device include corresponding hardware structures and/or software modules for performing the functions. A person skilled in the art should be easily aware that, in combination with the examples described in application embodiments disclosed in this application, units and method steps may be implemented by hardware or a combination of hardware and computer software in this application. Whether a function is performed by hardware or hardware driven by computer software depends on particular application scenarios and design constraint conditions of the technical solutions.

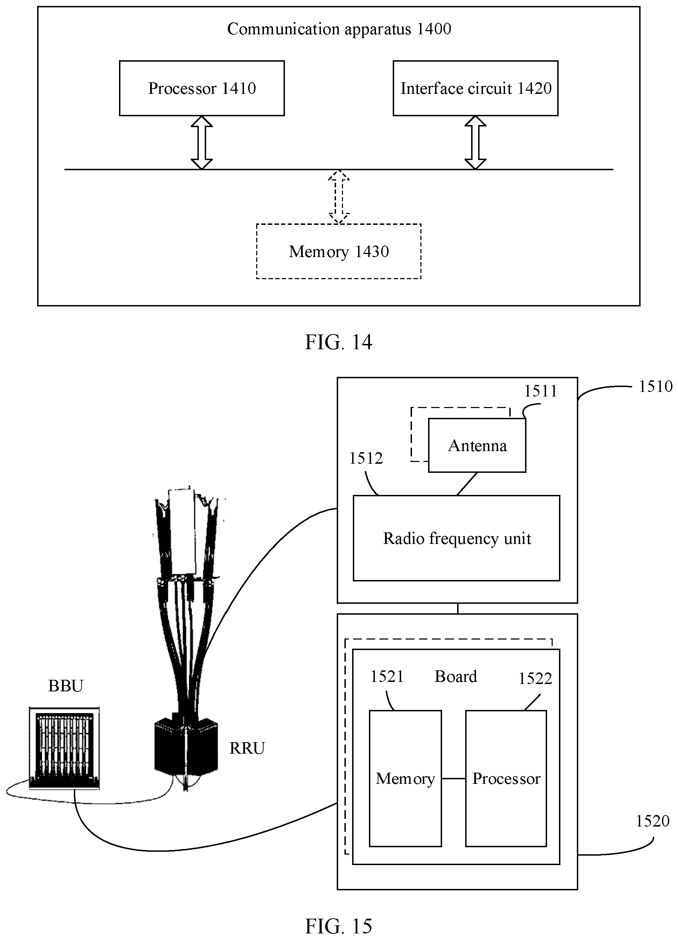

FIG. 13 and FIG. 14 are diagrams of structures of possible communication apparatuses according to application embodiments of this application. These communication apparatuses may be configured to implement functions of the terminal device or the base station in the foregoing method application embodiments. Therefore, beneficial effect of the foregoing method application embodiments can also be implemented. In this application embodiment of this application, the communication apparatus may be one of the terminal devices 120a to 120j shown in FIG. 1, or may be the base station 110a or 110b shown in FIG. 1, or may be a module (for example, a chip) used in the terminal device or the base station.

As shown in FIG. 13, the communication apparatus 1300 includes a processing unit 1310 and a transceiver unit 1320. The communication apparatus 1300 is configured to implement the functions of the terminal device or the network device in the foregoing method application embodiment shown in FIG. 4, FIG. 11, or FIG. 12.

When the communication apparatus 1300 is configured to implement the functions of the terminal device in the method application embodiment shown in FIG. 4, the transceiver unit 1320 is configured to: receive a capability query message from the network device, and report capability information of the terminal device to the network device.

When the communication apparatus 1300 is configured to implement the functions of the network device in the method application embodiment shown in FIG. 4, the transceiver unit 1320 is configured to: send a capability query message, and receive capability information reported by the terminal device; and the processing unit 1310 is configured to determine switching time of each band set pair based on indication information in an indication information set, where the switching time indicates time for the terminal device to switch a transmission branch between two band sets in the band set pair.

When the communication apparatus 1300 is configured to implement the functions of the terminal device in the method application embodiment shown in FIG. 11, the transceiver unit 1320 is configured to: receive a capability query message from the network device, and report capability information of the terminal device to the network device, where an indication information set in the capability information includes first indication information of a first band set pair and second indication information of a second band set pair.

When the communication apparatus 1300 is configured to implement the functions of the network device in the method application embodiment shown in FIG. 11, the transceiver unit 1320 is configured to: send a capability query message, and receive capability information reported by the terminal device; and the processing unit 1310 is configured to determine second switching time of a second band set pair based on a first indication information set and a second indication information set.

When the communication apparatus 1300 is configured to implement the functions of the terminal device in the method application embodiment shown in FIG. 12, the transceiver unit 1320 is configured to: receive a capability query message from the network device, and report capability information of the terminal device to the network device based on a preset correspondence between N band set pairs and pieces of indication information in an indication information set.

When the communication apparatus 1300 is configured to implement the functions of the network device in the method application embodiment shown in FIG. 12, the transceiver unit 1320 is configured to: send a capability query message, and receive capability information reported by the terminal device; and the processing unit 1310 is configured to determine switching time of each band set pair based on a preset correspondence between N band set pairs and pieces of indication information in an indication information set.

For more detailed descriptions of the processing unit 1310 and the transceiver unit 1320, refer to related descriptions in the method application embodiment shown in FIG. 4, FIG. 11, or FIG. 12.

As shown in FIG. 14, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4, FIG. 11, or FIG. 12, the processor 1410 is configured to implement the function of the processing unit 1310, and the interface circuit 1420 is configured to implement the function of the transceiver unit 1320.

When the communication apparatus is a chip used in a terminal device, the chip in the terminal device implements the functions of the terminal device in the foregoing method application embodiments. The chip in the terminal device receives information from another module (for example, a radio frequency module or an antenna) in the terminal device, and the information is sent by a network device to the terminal device. Alternatively, the chip in the terminal device sends information to another module (for example, a radio frequency module or an antenna) in the terminal device, and the information is sent by the terminal device to a network device.

When the communication apparatus is a module used in a network device, the module in the network device implements the functions of the network device in the foregoing method application embodiments. The module in the network device receives information from another module (for example, a radio frequency module or an antenna) in the network device, and the information is sent by a terminal device to the network device. Alternatively, the module in the network device sends information to another module (for example, a radio frequency module or an antenna) in the network device, and the information is sent by the network device to a terminal device. The module in the network device herein may be a baseband chip of the network device, or may be a DU or another module. The DU herein may be a DU in an open radio access network (open radio access network, O-RAN) architecture.

It can be understood that, the processor in application embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

When the apparatus in embodiments of this application is a network device, the apparatus may be shown in FIG. 15. The apparatus may include one or more radio frequency units, for example, a remote radio unit (remote radio unit, RRU) 1510 and one or more baseband units (baseband units, BBU) (which may also be referred to as a digital unit (digital unit, DU)) 1520. The RRU 1510 may be referred to as a transceiver module. The transceiver module may include a sending module and a receiving module, or the transceiver module may be a module that can implement sending and receiving functions. The transceiver module may correspond to the transceiver module 1320 in FIG. 13, that is, the transceiver module may perform an action performed by the transceiver module 1320. Optionally, the transceiver module may also be referred to as a transceiver machine, a transceiver circuit, a transceiver, or the like, and may include at least one antenna 1511 and a radio frequency unit 1512. The RRU 1510 is mainly configured to: receive and send a radio frequency signal, and perform conversion between a radio frequency signal and a baseband signal. The BBU 2410 is mainly configured to perform baseband processing, control a base station, and the like. The RRU 1510 and the BBU 1520 may be physically disposed together, or may be physically disposed separately, namely, a distributed base station.

The BBU 1520 is a control center of the base station, may also be referred to as a processing module, may correspond to the processing module 1310 in FIG. 13, and is mainly configured to complete a baseband processing function, for example, channel coding, multiplexing, modulation, and spectrum spreading. In addition, the processing module may perform an action performed by the processing module 1310. For example, the BBU (the processing module) may be configured to control the base station to perform an operation procedure related to the network device in the foregoing method embodiments.

In an example, the BBU 1520 may include one or more boards, and a plurality of boards may jointly support a radio access network (for example, an LTE network) of a single access standard, or may separately support radio access networks (for example, an LTE network, a 5G network, or another network) of different access standards. The BBU 1520 further includes a memory 1521 and a processor 1522. The memory 1521 is configured to store necessary instructions and data. The processor 1522 is configured to control the base station to perform a necessary action, for example, configured to control the base station to perform the operation procedure related to the network device in the foregoing method embodiments. The memory 1521 and the processor 1522 may serve one or more boards. In other words, a memory and a processor may be disposed on each board. Alternatively, a plurality of boards may share a same memory and a same processor. In addition, a necessary circuit may be further disposed on each board.

The method steps in application embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in the network device or the terminal device as discrete components.

All or some of the foregoing application embodiments may be implemented by software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various application embodiments of this application, unless otherwise stated or there is a logic conflict, terms and/or descriptions in different application embodiments are consistent and may be mutually referenced, and technical features in different application embodiments may be combined based on an internal logical relationship thereof, to form a new application embodiment.

On a basis of whether "optional" is used in this specification, in this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B each may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It can be understood that various numbers in application embodiments of this application are merely used for distinguishing for ease of description, and are not used to limit the scope of application embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a capability query message from a network device; and
reporting capability information of a terminal device to the network device, wherein the capability information comprises an indication information set of N band set pairs, each piece of indication information in the indication information set is associated with one band set pair, the indication information indicates switching of a transmission branch performed by the terminal device between two band sets in the band set pair, the band set comprises at least one of L bands in the band set pair, L is an integer greater than or equal to 3, and N is a positive integer.

2. The method according to claim 1, wherein 2≤N, the N band set pairs are associated with one band combination, the band combination comprises all bands in the N band set pairs supported by the terminal device, and the reporting capability information of a terminal device to the network device comprises:
reporting the capability information of the terminal device to the network device based on a preset correspondence between the N band set pairs and the pieces of indication information in the indication information set.

3. The method according to claim 2, wherein an order of the pieces of indication information in the indication information set is the same as a preset order of the N band set pairs.

4. The method according to claim 2 or 3, wherein there is a correspondence between the preset order of the N band set pairs and an arrangement order of N elements in a first preset table.

5. The method according to claim 4, wherein the arrangement order of the N elements in the first preset table comprises:
an element in an i^{th} row and a j^{th} column in the first preset table is Eij, all elements Eij in the N elements are sequentially arranged in ascending order of columns and rows, there is a correspondence between a band set pair, in the N band set pairs, that comprises an i^{th} band set and a j^{th} band set and the element Eij in the table, j is greater than i, 1≤i≤K, j≤K, K, i, and j are all positive integers, and K is a quantity of band sets associated with the band combination.

6. The method according to claim 5, wherein K band sets comprise any Q bands in P bands in the band combination, the K band sets are arranged in a preset order in the first preset table, and Q is a positive integer.

7. The method according to any one of claims 1 to 5, wherein the indication information indicates switching time.

8. The method according to claim 7, wherein the switching time is related to a quantity of transmission branches configured on the band in the band set.

9. The method according to any one of claims 1, and 7 and 8, wherein the indication information indicates a band identifier for switching the transmission branch between the two band sets.

10. The method according to any one of claims 1 to 9, wherein the indication information indicates that the terminal device supports or does not support switching the transmission branch between the two band sets in the band set pair.

11. The method according to any one of claims 1 to 10, wherein the indication information indicates that switching time associated with M band set pairs in the N band set pairs is the same, each of the M band set pairs comprises same bands, and 2≤M.

12. The method according to any one of claims 1 to 11, wherein there is at least one same band between the two band sets in the band set pair.

13. A communication method, comprising:
sending a capability query message;
receiving capability information reported by a terminal device, wherein the capability information comprises an indication information set of N band set pairs, each piece of indication information in the indication information set is associated with one band set pair, the indication information indicates switching of a transmission branch performed by the terminal device between two band sets in the band set pair, the band set comprises at least one of L bands in the band set pair, L is an integer greater than or equal to 3, and N is a positive integer; and
determining switching time of at least one band set pair based on the indication information in the indication information set, wherein the switching time indicates time for the terminal device to switch the transmission branch between the two band sets in the band set pair.

14. The method according to claim 13, wherein the determining switching time of at least one band set pair based on the indication information in the indication information set comprises:
determining the switching time of the at least one band set pair based on a preset correspondence between the N band set pairs and the pieces of indication information in the indication information set.

15. The method according to claim 14, wherein an order of the pieces of indication information in the indication information set is the same as a preset order of the N band set pairs.

16. The method according to claim 14 or 15, wherein there is a correspondence between the preset order of the N band set pairs and an arrangement order of N elements in a second preset table.

17. The method according to claim 16, wherein the arrangement order of the N elements in the second preset table comprises:
an element in an i^{th} row and a j^{th} column in the second preset table is Eij, all elements Eij in the N elements are sequentially arranged in ascending order of columns and rows, there is a correspondence between a band set pair, in the N band set pairs, that comprises an i^{th} band set and a j^{th} band set and the element Eij in the table, j is greater than i, 1≤i≤K, j≤K, K, i, and j are all positive integers, and K is a quantity of band sets associated with the band combination.

18. The method according to claim 17, wherein K band sets comprise any Q bands in P bands in the band combination, the K band sets are arranged in a preset order in the first preset table, and Q is a positive integer.

19. The method according to any one of claims 13 to 18, wherein the indication information indicates switching time.

20. The method according to claim 19, wherein the switching time is related to a quantity of transmission branches configured on the band in the band set.

21. The method according to any one of claims 13, and 19 and 20, wherein the indication information indicates a band identifier for switching the transmission branch between the two band sets.

22. The method according to any one of claims 13 to 21, wherein the indication information indicates that the terminal device supports or does not support switching the transmission branch between the two band sets in the band set pair.

23. The method according to any one of claims 13 to 22, wherein the indication information indicates that switching time associated with M band set pairs in the N band set pairs is the same, each of the M band set pairs comprises same bands, and 2≤M.

24. The method according to any one of claims 13 to 22, wherein the switching time of the band set pair is related to time for the terminal device to switch the transmission branch between any band in one band set and any band in the other band set in the band set pair.

25. The method according to claim 24, wherein the switching time of the band set pair is maximum time for the terminal device to switch the transmission branch between any band in one band set and any band in the other band set in the band set pair.

26. A communication apparatus, comprising a module configured to perform the method according to any one of claims 1 to 12.

27. A communication apparatus, comprising a module configured to perform the method according to any one of claims 13 to 25.

28. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 12 through a logic circuit or by executing code instructions.

29. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 13 to 25 through a logic circuit or by executing code instructions.

30. A computer-readable storage medium, comprising computer program instructions, wherein when the computer program instructions are executed by a processor, the processor performs the method according to any one of claims 1 to 25.

31. A computer program product, wherein the computer program product comprises software code, and the software code is used to perform the steps in the method according to any one of claims 1 to 25.
